# EUROPÄISCHE PATENTSCHRIFT

(11) **EP 3 875 398 B1**
(45) Veröffentlichungstag und Bekanntmachung des Hinweises auf die Patenterteilung: **17.04.2024**
(21) Anmeldenummer: 20207880.4
(22) Anmeldetag: 16.11.2020
(51) Int. Cl.: B65D 79/00, A23L 3/015, B65D 41/34

(54) **VERSCHLUSS ZUM FLUIDDICHTEN VERSCHLIESSEN EINES MIT EINEM STOFF GEFÜLLTEN GEFÄSSES, BEHÄLTER MIT EINEM GEFÄSS UND EINEM VERSCHLUSS SOWIE VERFAHREN ZUM BEFÜLLEN EINES BEHÄLTERS MIT EINEM STOFF**
CLOSURE FOR THE FLUID-TIGHT CLOSURE OF A VESSEL FILLED WITH A SUBSTANCE, CONTAINER WITH A VESSEL AND A CLOSURE AND METHOD FOR FILLING A CONTAINER WITH A SUBSTANCE
FERMETURE DESTINÉE À LA FERMETURE ÉTANCHE D'UN CONTENANT REMPLI D'UNE SUBSTANCE, RÉCIPIENT COMPRENANT UN CONTENANT ET UNE FERMETURE, ET PROCÉDÉ POUR REMPLIR UN RÉCIPIENT D'UNE SUBSTANCE

(30) Priorität: 03.03.2020 DE 102020202731; 15.05.2020 WO PCT/EP2020/063709
(43) Veröffentlichungstag der Anmeldung: 08.09.2021
(73) Patentinhaber: Schellinger, Benedikt, 88605 Sauldorf (DE); Storz, Simon, 78604 Rietheim-Weilheim (DE)
(72) Erfinder: Schellinger, Benedikt, 88605 Sauldorf (DE); Storz, Simon, 78604 Rietheim-Weilheim (DE)
(74) Vertreter: Stellbrink & Partner Patentanwälte mbB

(56) Entgegenhaltungen:
- WO-A1-90/05681
- WO-A1-97/35779
- DE-B3-102016 212 598
- US-A- 2 034 739

## Beschreibung

Die Erfindung betrifft einen Verschluss zum fluiddichten Verschließen eines mit einem Stoff gefüllten Gefäßes, sowie einen Behälter mit einem Gefäß und mit einem das Gefäß fluiddicht verschließenden Verschluss und ein Verfahren zum Befüllen eines Behälters mit einem Stoff.

Aus dem Stand der Technik ist beispielsweise die Druckschrift DE 10 2005 013 902 B3 bekannt. Diese betrifft einen Verschluss, insbesondere für Getränke enthaltende Behälter, umfassend einen rohrförmigen Grundkörper, der mit dem Behälter im Bereich einer Abgabeöffnung desselben dicht verbunden ist. Eine Abdeckung ist an dem Grundkörper im Öffnungs- und Schließsinn des Verschlusses bewegbar. Es ist ein gasdichtes Verschlusselement für die Abgabeöffnung vorgesehen. Das Verschlusselement ist im Bereich seines umlaufenden Außenrandes am Grundkörper dauerhaft sowie im radialen Abstand innerhalb des Außenrandes an der Abdeckung zwischen einem äußeren, umlaufenden Randabschnitt und einem mittleren Abschnitt durchtrennbar befestigt. Bei Benutzung von mit dem Verschluss ausgerüsteten Behältern ist für den Verbraucher sowohl in gesundheitlicher als auch in qualitativer Hinsicht eine größere Sicherheit gegeben, während ein Hersteller den Verschluss wirtschaftlicher herstellen und ein Abfüller über eine größere logistische Flexibilität verfügen können.

Es ist eine Aufgabe der Erfindung, Mittel (beispielsweise einen Verschluss) zum vorzugsweise fluiddichten Verschließen eines mit einem Stoff gefüllten Gefäßes vorzuschlagen, welche gegenüber bekannten Verschlüssen Vorteile aufweist. Insbesondere soll durch Ausführungsformen der Erfindung das Bereitstellen des Stoffs mit besonders hoher Qualität ermöglicht werden, indem er ein einfaches und zuverlässiges Inaktivieren von in dem Stoff vorliegenden Mikroorganismen erlaubt.

Aus der DE 10 2016 212598 B3 ist ein Verschluss bekannt, der eine Basiskappe und ein hochdruckbeständiges flexibles Element aufweist. Die DE 10 2016 212598 B3 offenbart auch ein Gefäß, das diesen Verschluss umfasst und das über den Verschluss eine Druckbehandlung und eine Konservierung von beinhalteten Substanzen ermöglicht. Die DE 10 2016 212598 B3 bespricht Beispiele, bei denen die Gefäße mit einem Druck von 6000 bar beaufschlagt werden, was ein Druck ist, bei dem gemäß der DE 10 2016 212598 B3 pathogene Keime denaturiert werden können.

Die Erfindung betrifft einen Verschluss mit einem Druckübertragungselement, wobei das Druckübertragungselement fluiddicht ist. Das Druckübertragungselement ist ausgelegt, zusammen mit einem Grundkörper einen Verschluss zum fluiddichten Verschließen eines mit einem Stoff gefüllten Gefäßes zu bilden, wie im vorliegenden Anspruch 1 erklärt.

Die Erfindung sieht vor, dass das Druckübertragungselement durch Druckbeaufschlagung beschädigungsfrei zur biologischen Inaktivierung von in dem Stoff vorliegenden Mikroorganismen auslenkbar ist.

Ausführungsformen der Erfindung sehen vor, dass das Druckübertragungselement beschädigungsfrei in einer Auslenkungsrichtung um eine Strecke auslenkbar ist, die bezogen auf angewinkelt zu der Auslenkungsrichtung vorliegende Abmessungen des Druckübertragungselements in entspanntem Zustand mindestens 0,25 beträgt.

Ausführungsformen der Erfindung sehen vor, dass das Druckübertragungselement aus einem elastischen Material besteht oder elastisch ausgebildet ist.

Die Erfindung sieht vor, dass das Druckübertragungselement an dem Grundkörper fluiddicht befestigbar ist.

Ausführungsformen der Erfindung sehen vor, dass das Druckübertragungselement als Druckmembran vorliegt.

Ausführungsformen der Erfindung sehen vor, dass das Druckübertragungselement einen Faltenbalg aufweist.

Ausführungsformen der Erfindung sehen vor, dass der Faltenbalg 2 bis 5, bevorzugt 3 bis 4 innere Falten aufweist.

Ausführungsformen der Erfindung sehen vor, dass die Druckmembran beschädigungsfrei auf mindestens 200 %, mindestens 250 %, mindestens 300 %, mindestens 400 %, mindestens 500 % oder mindestens 600 % der Fläche dehnbar ist.

Die Erfindung sieht vor, dass das Druckübertragungselement ausgelegt ist, zwischen dem Grundkörper und dem Gefäß eingeklemmt zu werden.

Insbesondere kann eine solche Ausgestaltung auch das Einbringen hoher Drücke erlauben und gleichzeitig erlauben, ein besonders einfaches und effizientes Verfahren zum Befüllen eines entsprechend ausgestalteten Behälters bereitzustellen.

Ausführungsformen der Erfindung sehen vor, dass das Druckübertragungselement als separates Element ausgestaltet ist, das nicht fest mit dem Grundkörper verbunden ist.

Ausführungsformen der Erfindung sehen vor, dass das Druckübertragungselement eine Längsachse hat.

Ausführungsformen der Erfindung sehen vor, dass das Druckübertragungselement drehsymmetrisch bezüglich der Längsachse ist.

Das kann insbesondere für Verfahren, die das entsprechende Druckübertragungselement nutzen vorteilhaft sein, da bei diesen nicht auf die radiale Ausrichtung des Druckübertragungselement geachtet werden muss, was die Ausgestaltung derartiger Verfahren vereinfacht.

Ausführungsformen der Erfindung sehen vor, dass der Faltenbalg gerade Bereiche aufweist, die im Wesentlichen parallel zu einer Ebene sind, die senkrecht zur Längsachse ist.

Ausführungsformen der Erfindung sehen vor, dass das Druckübertragungselement einen Verbindungsabschnitt aufweist.

Ausführungsformen der Erfindung sehen vor, dass der Verbindungsabschnitt ausgelegt ist, zwischen dem Grundkörper und dem Gefäß eingeklemmt zu werden.

Ausführungsformen der Erfindung sehen vor, dass der Verbindungsabschnitt einen planen Abschnitt aufweist, der zumindest im Wesentlichen parallel ist zu einer Ebene, die senkrecht zur Längsachse ist.

Ausführungsformen der Erfindung sehen vor, dass der plane Abschnitt in radialer Richtung eine Ausdehnung von 2 mm bis 8 mm, vorzugsweise 3 mm bis 5 mm hat.

Ausführungsformen der Erfindung sehen vor, dass der Verbindungsabschnitt einen gewinkelten Abschnitt aufweist, der in einem Winkel zum planen Abschnitt angeordnet ist.

Mittels eines entsprechenden gewinkelten Abschnittes kann insbesondere ein definierter Anschlag an einer entsprechend ausgestalteten Anschlagfläche erzielt werden, was für das Einbringen eines Drucks vorteilhaft sein kann.

Ausführungsformen der Erfindung sehen vor, dass der gewinkelte Abschnitt radial weiter außen angeordnet ist als der plane Abschnitt.

Ausführungsformen der Erfindung sehen vor, dass für das Druckübertragungselement die Richtungen distal und proximal entlang der Längsachse definiert sind, wobei proximal im bestimmungsgemäßen Gebrauch zu einem Inneren des Gefäßes hinweist und distal entgegengesetzt ist.

Ausführungsformen der Erfindung sehen vor, dass sich der gewinkelte Abschnitt proximal von dem planen Abschnitt erstreckt.

Ausführungsformen der Erfindung sehen vor, dass der Faltenbalg proximal vom planen Abschnitt ist.

Ausführungsformen der Erfindung sehen vor, dass das Druckübertragungselement einen Übergangsabschnitt aufweist, der zwischen dem planen Abschnitt und dem Faltenbalg angeordnet ist.

Ausführungsformen der Erfindung sehen vor, dass der Übergangsabschnitt radial weiter außen angeordnet ist als der radial äußerste Abschnitt des Faltenbalgs.

Ausführungsformen der Erfindung sehen vor, dass der gewinkelte Abschnitt ausgelegt ist, im mit dem Grundkörper verbundenen Zustand an ein Anschlagelement des Grundkörpers anzuschlagen.

Ausführungsformen der Erfindung sehen vor, dass das Druckübertragungselement eine Ausdehnung senkrecht zur Längsachse hat, die im Bereich von 20 mm bis 60 mm, vorzugsweise im Bereich von 30 mm bis 50 mm, weiter vorzugsweise im Bereich von 35 mm bis 45 mm liegt.

Ausführungsformen der Erfindung sehen vor, dass das Druckübertragungselement dazu ausgelegt ist, sich bei einer Druckbeaufschlagung in sämtlichen 3 Dimensionen auszudehnen. Diese Ausdehnung kann beispielsweise der Ausdehnung eines Luftballons ähnlich sein. Ausführungsformen der Erfindung sehen vor, dass das Druckübertragungselement dazu ausgelegt ist, bei einer Dekompression gestaucht zu werden. Anders ausgedrückt kann das Druckübertragungselement bei einem Druckablass (beispielsweise, wenn ein hoher Druck von beispielsweise 6000 bar abgelassen wird) wieder zusammengedrückt werden.

Der Grundkörper ist ausgelegt, zusammen mit dem Druckübertragungselement, das vorstehend beschrieben wurde, einen Verschluss zum fluiddichten Verschließen eines mit einem Stoff gefüllten Gefä-βes zu bilden.

Ausführungsformen der Erfindung sehen vor, dass der Grundkörper starr ist. Ausführungsformen der Erfindung sehen vor, dass an dem Grundkörper ein Schraubgewinde zur Befestigung an dem Gefäß ausgebildet ist.

Ausführungsformen der Erfindung sehen vor, dass das Schraubgewinde als Innengewinde ausgestaltet ist.

Der Grundkörper hat eine Körper-Längsachse, entlang der die Richtungen proximal und distal definiert sind, wobei proximal im bestimmungsgemäßen Gebrauch zu einem Inneren des Gefäßes hinweist und distal entgegengesetzt ist.

Ausführungsformen der Erfindung sehen vor, dass das Schraubgewinde die Körper-Längsachse um mehr als 250°, vorzugsweise um mehr als 300°, weiter vorzugsweise um mehr als 350° umläuft.

Ausführungsformen der Erfindung sehen vor, dass das Schraubgewinde die Körper-Längsachse um nicht mehr als 450°, vorzugsweise um nicht mehr als 430°, weiter vorzugsweise um nicht mehr als 400° umläuft.

Die Erfindung sieht vor, dass der Grundkörper mindestens ein Originalitätselement aufweist.

Mittels eines Originalitätselementes kann es insbesondere möglich sein, sicherzustellen, dass der Grundkörper nur einmal auf ein Gefäß aufgebracht wird. Somit kann das Originalitätselement eine Erstöffnungsgarantie bereitstellen. Ein Benutzer, der ein Grundkörper mit einem intakten Originalitätselement sieht, kann daher davon ausgehen, dass der Grundkörper bisher noch nicht geöffnet wurde.

Die Erfindung sieht vor, dass das mindestens eine Originalitätselement eine Mehrzahl von Originalitätselementen ist.

Eine solche Ausgestaltung von einer definierten Anzahl von diskreten Originalitätselementen kann besonders vorteilhaft sein, um die Originalität sicher gewährleisten zu können. Ausführungsformen der Erfindung sehen vor, dass die Mehrzahl von Originalitätselementen zwei Originalitätselemente umfasst, die bezüglich der Körper-Längsachse um 180° zueinander verschoben angeordnet sind.

Ausführungsformen der Erfindung sehen vor, dass jedes Originalitätselement eine Keilstruktur aufweist.

Ausführungsformen der Erfindung sehen vor, dass jedes Originalitätselement einen Hinterschnitt an einem breiteren Ende der Keilstruktur aufweist.

Ausführungsformen der Erfindung sehen vor, dass jedes Originalitätselement einen Sollbruchbereich aufweist.

Ausführungsformen der Erfindung sehen vor, dass direkt proximal und direkt distal von jedem Originalitätselement kein Material des Grundkörpers vorgesehen ist.

Die Erfindung sieht vor, dass der Grundkörper ausgelegt ist, ohne Beschädigung des mindestens einen Originalitätselementes an dem Gefäß angebracht zu werden und mit einer Beschädigung mindestens eines des mindestens einen Originalitätselementes von dem Gefäß getrennt zu werden.

Ausführungsformen der Erfindung sehen vor, dass das mindestens eine Originalitätselement proximal vom Schraubgewinde angeordnet ist.

Die Erfindung sieht vor, dass mindestens zwei der Originalitätselemente an unterschiedlichen Positionen entlang der Körper-Längsachse angeordnet sind.

In anderen Worten können die beispielsweise zwei Originalitätselemente (die auch allgemein als Originalitäten bezeichnet werden können) also einen Höhenversatz haben. Ein solches Anbringen der Originalitätselemente kann besonders vorteilhaft sein. Beispielsweise kann ein entsprechender Grundkörper (oder allgemein: ein entsprechender Verschluss) auch in Verknüpfung mit einem Gefäß aus Glas verwendet werden. Allerdings hat Glas relativ ungenaue Fertigungstoleranzen. Ein Anbringen der Originalitätselemente an unterschiedlichen axialen Positionen (also an unterschiedlichen "Höhen") kann insbesondere dazu führen, dass die Originalität auch bei Gefäßen mit ungenauen Fertigungstoleranzen, beispielsweise Glas, sicher angezeigt werden kann. In Ausführungsformen, in denen ein Gewinde vorgesehen ist, dürfte es verständlich sein, dass das Gewinde eine Steigung besitzt. Daher ist die Höhe der Gewindeflanken auf den gegenüberliegenden Seiten unterschiedlich. Auch aus diesem Grund kann es vorteilhaft sein, die Originalitätselemente an unterschiedlichen Höhen anzuordnen, da derart ein gewisser Abstand zum Gewinde gewahrt werden kann, was eine Beschädigung der Originalitätselemente beim Aufdrehen des Verschlusses (im Sinne von: Verschließen des Behälters) verhindert. Ausführungsformen der Erfindung sehen vor, dass der Grundkörper ein Anschlagelement umfasst, das derart ausgelegt ist, dass ein Abschnitt des Druckübertragungselement daran anschlagen kann.

In anderen Worten kann beispielsweise der vorher besprochene gewinkelte Abschnitt des Druckübertragungselement an das Anschlagelement anschlagen. So kann der entsprechende Abschnitt im bestimmungsgemäßen Gebrauch definiert am Grundkörper angeordnet sein, was eine geeignete Druckbeaufschlagung erleichtert.

Ausführungsformen der Erfindung sehen vor, dass das Anschlagelement distal vom Schraubgewinde angeordnet ist,
Ausführungsformen der Erfindung sehen vor, dass das Anschlagelement eine geringere radiale Ausdehnung hat als das Schraubgewinde.

Ausführungsformen der Erfindung sehen vor, dass der Grundkörper eine Gesamthöhe entlang der Körper-Längsachse hat, die im Bereich von 8 mm bis 20 mm, vorzugsweise im Bereich von 10 mm bis 15 mm, weiter vorzugsweise im Bereich von 12 mm bis 14 mm liegt.

Damit kann der Grundkörper eine relativ geringe Gesamthöhe aufweisen, was den Materialbedarf gegenüber bekannten Verschlüssen verringert. Insbesondere kann die beschriebene Ausgestaltung der Originalitätselemente es erlauben, den Grundkörper entsprechend kompakt auszugestalten.

Ausführungsformen der Erfindung sehen vor, dass der Grundkörper so ausgelegt ist, dass das mindestens eine durch Trennung vom Gefäß beschädigte Originalitätselement am Rest des Grundkörpers befestigt ist. D.h. dass auch das mindestens eine durch die Öffnung beschädigte Originalitätselement am Grundkörper verbleibt und mit dem Grundkörper vom Gefäß entfernt werden kann, was beispielsweise aus Gründen der Mülltrennung vorteilhaft sein kann.

Ausführungsformen der Erfindung sehen vor, dass der distale Bereich entlang der Körper-Längsachse eine axiale Länge im Bereich von 4 mm bis 15 mm, vorzugsweise im Bereich von 6 mm bis 10 mm, weiter vorzugsweise im Bereich von 7 mm bis 9 mm aufweist.

Ausführungsformen der Erfindung sehen vor, dass die Deckelfläche auf einer Innenseite eine hervorstehende Anpresskante aufweist.

Ausführungsformen der Erfindung sehen vor, dass der Grundkörper materialeinheitlich ausgestaltet ist. Das kann eine besonders einfache Ausführung des Grundkörpers erlauben.

Ausführungsformen der Erfindung sehen vor, dass der Grundkörper spritzgegossen ist.

Ausführungsformen der Erfindung sehen vor, dass der Grundkörper ein Mantelelement und eine Deckelfläche aufweist.

Ausführungsformen der Erfindung sehen vor, dass das Mantelelement einen distalen Bereich und einen sich daran anschließenden proximalen Abschnitt aufweist.

Ausführungsformen der Erfindung sehen vor, dass der distale Bereich zur besseren Handhabung strukturiert ist.

Ausführungsformen der Erfindung sehen vor, dass der proximale Abschnitt entlang der Körper-Längsachse eine Länge von 2 mm bis 10 mm, vorzugsweise 3 mm bis 7 mm, weiter vorzugsweise 4 mm bis 6 mm hat. Abermals kann insbesondere durch die vorstehenden Maßnahmen eine besonders kompakte Ausgestaltung des Grundkörpers erzielt werden. Ausführungsformen der Erfindung sehen vor, dass das mindestens eine Originalitätselemente im proximalen Abschnitt vorgesehen ist.

Ausführungsformen der Erfindung sehen vor, dass die Strecke, über welche das Druckübertragungselement in der Auslenkungsrichtung beschädigungsfrei auslenkbar ist, bezogen auf Abmessungen des Verschlusses in derselben Richtung mindestens 50 %, mindestens 75 %, mindestens 90 %, mindestens 95 % oder mindestens 100 % beträgt.

Ausführungsformen der Erfindung sehen vor, dass der Grundkörper und das Druckübertragungselement einstückig miteinander ausgestaltet sind.

Ausführungsformen der Erfindung sehen vor, dass Grundkörper und das Druckübertragungselement materialeinheitlich miteinander ausgestaltet sind.

Ausführungsformen der Erfindung sehen vor, dass der Grundkörper und das Druckübertragungselement aus unterschiedlichen Materialien bestehen.

Ausführungsformen der Erfindung sehen vor, dass der Grundkörper und das Druckübertragungselement stoffschlüssig miteinander verbunden sind.

Ausführungsformen der Erfindung sehen vor, dass der Grundkörper und das Druckübertragungselement als separate Elemente ausgestaltet sind.

Ausführungsformen der Erfindung sehen vor, dass der Verschluss ein Signalelement aufweist, das dazu vorgesehen und ausgebildet ist, sich bei einem Überschreiten eines Solldrucks durch einen während der Druckbeaufschlagung vorliegenden Druck irreversibel zu verändern, sodass das Signalelement vor der Drucküberschreitung einen ersten Signalzustand und nach der Drucküberschreitung einen zweiten Signalzustand aufweist.

Ausführungsformen der Erfindung sehen vor, dass der Verschluss mit dem Gefäß verschraubbar ist.

Ausführungsformen der Erfindung sehen vor, dass der Verschluss so ausgestaltet ist, dass das Druckübertragungselement, wenn das Gefäß mit dem Verschluss verschlossen ist, klemmend zwischen dem Gefäß und dem Grundkörper gehalten ist.

D.h. in diesem Zustand kontaktiert das Druckübertragungselement und insbesondere der Verbindungsabschnitt des Druckübertragungselement sowohl das Gefäß als auch den Grundkörper.

Ausführungsformen der Erfindung sehen vor, dass der gewinkelte Abschnitt an das Anschlagelement anschlägt.

In anderen Worten sehen Ausführungsformen der Erfindung also einen Verschluss zum fluiddichten Verschließen eines mit einem Stoff gefüllten Gefäßes vor. Dabei ist vorgesehen, dass der Verschluss über ein fluiddichtes Druckübertragungselement verfügt, das durch Druckbeaufschlagung beschädigungsfrei zur biologischen Inaktivierung von in dem Stoff vorliegenden Mikroorganismen auslenkbar ist.

Der Verschluss ist zum fluiddichten Verschließen des Gefäßes vorgesehen und ausgebildet, wobei das Gefäß und der Verschluss Bestandteil eines Behälters sind. In dem Gefäß ist der Stoff anordnenbar beziehungsweise bereitstellbar. Üblicherweise ist es vorgesehen, zunächst den Stoff in das Gefäß einzubringen und anschließend das Gefäß mit dem Verschluss derart fluiddicht zu verschließen, dass der Stoff zuverlässig in dem Gefäß gehalten ist. Der Verschluss verhindert insoweit bis zu einem Öffnen des Verschlusses beziehungsweise des Behälters dauerhaft und durchgehend, dass der Stoff aus dem Gefäß herausgelangt und dass ein anderer Stoff, beispielsweise ein während der Druckbeaufschlagung verwendetes Fluid, in das Gefäß hineingelangt. Der Verschluss verschließt das Gefäß also auch und insbesondere während der Druckbeaufschlagung fluiddicht. Beispielsweise weist das Gefäß eine Befüllöffnung auf, durch welche der Stoff in das Gefäß einbringbar ist beziehungsweise eingebracht wird. Diese Befüllöffnung wird nachfolgend mit dem Verschluss fluiddicht verschlossen. Hierzu wird der Verschluss an dem Gefäß befestigt.

Das Befestigen kann grundsätzlich auf beliebige Art und Weise geschehen. Der Verschluss kann als Deckel ausgestaltet sein. Beispielsweise ist der Verschluss ein Schraubverschluss beziehungsweise Schraubdeckel, wird also mit dem Gefäß verschraubt. Hierzu weist der Verschluss ein Schraubgewinde und das Gefäß ein entsprechendes Gegengewinde auf. Es kann vorgesehen sein, dass das Schraubgewinde als Innengewinde und das Gegengewinde als Außengewinde vorliegt. Auch eine umgekehrte Ausgestaltung kann jedoch realisiert sein. Alternativ ist es selbstverständlich möglich, dass der Verschluss stoffschlüssig an dem Gefäß befestigt ist, beispielsweise durch Kleben, Schweißen oder dergleichen.

Auch kann der Verschluss in Form eines Stopfens vorliegen, der kraftschlüssig an dem Gefäß befestigt wird. In diesem Fall weist der Verschluss, insbesondere ein Grundelement des Verschlusses, an dem das Druckausgleichselement befestigt ist, einen elastischen Bereich auf, der die kraftschlüssige Verbindung bei Anordnung des Verschlusses an, auf oder in dem Gefäß sicherstellt. In jedem Fall ist es von Bedeutung, dass der Verschluss fluiddicht mit dem Gefäß verbunden ist, um den Stoff in dem Gefäß zu halten und ein Herausgelangen, insbesondere Auslaufen des Stoffs aus dem Gefäß zu verhindern.

Das Gefäß weist bevorzugt eine starre Gefäßwand auf, welche einen Innenraum des Gefäßes abseits der Befüllöffnung vollständig einschließt. Der Innenraum ist zur Aufnahme des Stoffs vorgesehen und ausgebildet. Das Gefäß weist beispielsweise eine im Wesentlichen hohlzylindrische, insbesondere hohlkreiszylindrische, Form auf. Das Gefäß kann jedoch auch zumindest bereichsweise eine Kugelform aufweisen. Das Gefäß beziehungsweise seine Gefäßwand besteht bevorzugt aus einem starren Material, welches beispielsweise einen Elastizitätsmodul von mindestens 10.000 MPa, mindestens 30.000 MPa, mindestens 50.000 MPa, mindestens 60.000 MPa oder mindestens 70.000 MPa aufweist. Beispielsweise besteht das Gefäß aus Glas, liegt also als Glasbehälter vor. In diesem Fall kann das Gefäß auch als Hohlglas bezeichnet werden. Beispielsweise wird als Material für das Gefäß silikatisches Glas verwendet, insbesondere Kalknatronglas beziehungsweise Normalglas oder Borosilikatglas.

Besonders bevorzugt ist das Gefäß zur Aufnahme eines Getränks vorgesehen und ausgebildet. Das Getränk liegt beispielsweise in Form eines Safts, insbesondere eines Fruchtsafts oder Gemüsesafts, vor. Der Stoff ist insoweit ein Lebensmittel und das Gefäß zur Aufnahme eines Lebensmittels vorgesehen. Das Gefäß besteht daher bevorzugt aus einem lebensmittelechten Material.

Der Verschluss, mit welchem das Gefäß fluiddicht verschließbar ist, verfügt zumindest über das Druckübertragungselement, bevorzugt jedoch über einen Grundkörper und das Druckübertragungselement. Der Grundkörper ist starr ausgebildet und dient bevorzugt der Befestigung des Verschlusses an dem Gefäß. Das Druckübertragungselement ist bezüglich des Grundkörpers auslenkbar beziehungsweise verlagerbar. Es kann fluiddicht an dem Grundkörper befestigt sein und ist selbst auch fluiddicht. Das Druckübertragungselement ist derart ausgestaltet, dass es durch Druckbeaufschlagung auslenkbar ist, nämlich bezüglich des Grundkörpers. Es ist weiter derart ausgestaltet, dass es beschädigungsfrei ein Auslenken zulässt, das zur biologischen Inaktivierung von der in dem Stoff vorliegenden Mikroorganismen hinreichend ist. Unter dem Auslenken ist insbesondere auch ein nur bereichsweises Auslenken des Druckübertragungselements zu verstehen, das zum Beispiel bei einem druckbedingten Verformen des Druckübertragungselements auftritt.

Insbesondere im Falle des Lebensmittels, zum Beispiel des Getränks, ist es notwendig, in dem Stoff eventuell vorliegende Mikroorganismen zu inaktivieren, um eine hohe Sicherheit und eine lange Haltbarkeit des Lebensmittels sicherzustellen. Das Inaktivieren kann beispielsweise durch Pasteurisieren erfolgen, also durch ein Erhitzen des Stoffs. Das Erhitzen kann jedoch zur Beeinträchtigung des Stoffs selbst führen, beispielsweise zur Veränderung eines Geschmacks. Aus diesem Grund soll das Inaktivieren der Mikroorganismen nicht durch Erhitzen, sondern durch die Druckbeaufschlagung erfolgen. Hierzu ist das Druckübertragungselement des Verschlusses vorgesehen, welches auslenkbar ist, insbesondere bezüglich des Grundkörpers.

Das Druckübertragungselement dient also dem Übertragen eines außerhalb des Gefäßes vorliegenden Umgebungsdrucks auf den Innenraum und somit dem Herstellen eines Druckausgleichs zwischen der Außenumgebung und dem Innenraum. Beispielsweise liegt in dem Innenraum vor der Druckbeaufschlagung Normaldruck vor, also ein Druck bei physikalischen Normbedingungen. Dieser Druck beträgt 1013,25 hPa. Beispielsweise beträgt der Druck in dem Innenraum vor der Druckbeaufschlagung höchstens 1,1 bar oder höchstens 1,2 bar. Bei der Druckbeaufschlagung wird der das Gefäß und dem Verschluss aufweisende Behälter mit einem Druck beaufschlagt, der über das Druckübertragungselement auf den Innenraum übertragen wird. Aufgrund des Druckübertragungselements liegt also in dem Innenraum der gleiche oder zumindest nahezu der gleiche Druck beziehungsweise Innendruck vor wie in der Außenumgebung. Beispielsweise beträgt der in dem Innenraum vorliegende Innendruck mindestens 95 %, mindestens 96 %, mindestens 97 %, mindestens 98 % oder mindestens 99 % des Umgebungsdrucks.

Der Umgebungsdruck kann während der Druckbeaufschlagung derart eingestellt werden, dass der in dem Innenraum vorliegende Innendruck hinreichend ist, um einen bestimmten Anteil von in dem Stoff vorliegenden Mikroorganismen biologisch zu inaktivieren. Unter dem bestimmten Anteil sind beispielsweise mindestens 90 %, mindestens 95 % oder mehr der Mikroorganismen zu verstehen. Insbesondere kann durch die Druckbeaufschlagung die aerobe Gesamtkeimzahl wenigstens um einen der genannten Werte reduziert werden. Bevorzugt beträgt der Druck, mit welchem die Druckbeaufschlagung durchgeführt wird, mindestens 4.000 bar, mindestens 5.000 bar, mindestens 6.000 bar, mindestens 7.000 bar oder mindestens 8.000 bar. In anderen Worten wird der Druck bei der Druckbeaufschlagung bevorzugt derart eingestellt, dass der Innendruck mindestens einem der genannten Werte entspricht. Beispielsweise erfolgt die Druckbeaufschlagung über einen Zeitraum, welcher derart gewählt ist, dass der gewünschte Anteil der Mikroorganismen biologisch inaktiviert wird. Bevorzugt beträgt der Zeitraum mindestens 5 Minuten, mindestens 10 Minuten oder mindestens 15 Minuten.

Der Verschluss kann derart ausgestaltet sein, dass das Druckübertragungselement trotz des hohen Drucks, welcher während der Druckbeaufschlagung auf das Druckübertragungselement wirkt, beschädigungsfrei ausgelenkt wird. Darunter ist zu verstehen, dass der Verschluss und insbesondere das Druckübertragungselement zumindest fluiddicht bleiben. Entsprechend verschließt der Verschluss den Behälter auch während der Druckbeaufschlagung vollständig fluiddicht, sodass kein Fluid aus der Außenumgebung durch den Verschluss hindurch in den Behälter gelangen kann, insbesondere nicht ein zur Druckbeaufschlagung verwendetes Fluid, welches den Behälter während der Druckbeaufschlagung umgibt, insbesondere vollständig.

Besonders bevorzugt ist es vorgesehen, dass das Druckübertragungselement während der Druckbeaufschlagung lediglich elastisch ausgelenkt wird. Beispielsweise liegt das Druckübertragungselement vor der Druckbeaufschlagung in einer ersten Stellung vor. Während der Druckbeaufschlagung wird es aus der ersten Stellung in Richtung einer zweiten Stellung beschädigungsfrei ausgelenkt. Es kann nun vorgesehen sein, dass das Druckübertragungselement nach der Druckbeaufschlagung in seiner ausgelenkten Stellung, also in der zweiten Stellung, verbleibt. Besonders bevorzugt ist es jedoch vorgesehen, dass das Druckübertragungselement aufgrund seiner elastischen Ausgestaltung zumindest in Richtung der ersten Stellung verlagert wird, insbesondere bis in die erste Stellung hinein. In diesem Fall liegt also das Druckübertragungselement nach der Druckbeaufschlagung in derselben Stellung vor wie vor der Druckbeaufschlagung oder zumindest nahezu in derselben Stellung, sodass keine optische Beeinträchtigung des Verschlusses durch die Druckbeaufschlagung verbleibt.

Beispielsweise ist das Druckübertragungselement derart ausgestaltet, dass er bei einer im Zuge der Druckbeaufschlagung erfolgenden Erhöhung des Drucks im Vergleich zu einem vor der Druckbeaufschlagung vorliegenden Drucks um einen Faktor von mindestens 10, mindestens 100, mindestens 1.000, mindestens 2.000, mindestens 4.000 oder mehr beschädigungsfrei ausgelenkt wird, insbesondere elastisch. In anderen Worten wird während der Druckbeaufschlagung durch die beschädigungsfreie Verformung des Druckübertragungselements der in dem Behälter vorliegende Innendruck um einen der genannten Faktoren erhöht.

Der Verschluss ist bevorzugt derart ausgestaltet, dass das Druckübertragungselement in Richtung des Gefäßes und/oder in dieses hinein verlagerbar ist. Insbesondere ist das Druckübertragungselement derart angeordnet und/oder ausgebildet, dass es bei der Druckbeaufschlagung zumindest bereichsweise in das Gefäß eingreift. Beispielsweise ist der Verschluss derart ausgestaltet, dass das Druckübertragungselement bei der Druckbeaufschlagung zumindest bereichsweise in Kontakt mit dem Inhalt des Gefäßes, also dem darin vorliegenden Stoff, kommt.

Die beschriebene Ausgestaltung des Verschlusses ermöglicht das zuverlässige und fluiddichte Verschließen des Gefäßes und gleichzeitig das Druckbeaufschlagen des in dem Gefäß befindlichen Stoffs. Durch die Druckbeaufschlagung können eventuell in dem Stoff vorliegende Mikroorganismen biologisch inaktiviert werden, sodass eine besonders sichere Bereitstellung des Stoffs realisiert werden kann. Der Stoff ist beispielsweise ein Feststoff, eine Flüssigkeit oder ein Gas. Der Feststoff ist zum Beispiel ein Lebensmittel, insbesondere Obst oder Gemüse, ein Medikament oder ein Kosmetikum. Der Feststoff kann zum Beispiel als Pulver oder Puder vorliegen. Als Flüssigkeit wird beispielsweise Saft, insbesondere ein Frucht- und/oder Gemüsesaft verwendet. Die Flüssigkeit kann insoweit ebenfalls ein Lebensmittel sein. Lebensmittel können durch die Druckbeaufschlagung haltbar gemacht werden, insbesondere ohne eine zusätzliche Wärmebehandlung beziehungsweise Pasteurisierung. Hierdurch ist ein Lebensmittel von besonders hoher Qualität bereitstellbar.

Eine Weiterbildung der Erfindung sieht vor, dass das Druckübertragungselement beschädigungsfrei in einer Auslenkungsrichtung um eine Strecke auslenkbar ist, insbesondere elastisch auslenkbar ist, die bezogen auf angewinkelt zu der Auslenkungsrichtung vorliegende Abmessungen des Druckübertragungselements in entspanntem Zustand mindestens 0,25, insbesondere mindestens 0,5, mindestens 0,55, mindestens 0,6, mindestens 0,65, mindestens 0,7 oder mindestens 0,75 beträgt. Unter dem entspannten Zustand des Druckübertragungselements ist ein Zustand beziehungsweise eine Stellung des Druckübertragungselements zu verstehen, welcher vor, insbesondere unmittelbar vor der Druckbeaufschlagung oder nach der Druckbeaufschlagung vorliegt. Das Auslenken des Druckübertragungselements während der Druckbeaufschlagung erfolgt in der Auslenkungsrichtung. Die Auslenkungsrichtung liegt beispielsweise in Richtung einer Längsmittelachse des Verschlusses oder parallel zu dieser vor.

Angewinkelt, also unter einem Winkel von größer als 0° und kleiner als 180°, zu der Auslenkungsrichtung weist das Druckübertragungselement bestimmte Abmessungen auf. Besonders bevorzugt liegen die Abmessungen in einer senkrecht zu der Auslenkungsrichtung vorliegenden Richtung vor. Beispielsweise entsprechen die Abmessungen des Druckübertragungselements einem Durchmesser des Druckübertragungselements. Das Druckübertragungselement ist derart ausgestaltet, dass es in der Auslenkungsrichtung beschädigungsfrei über eine Strecke auslenkbar ist, die mindestens das 0,25-fache der Abmessungen des Druckübertragungselements beträgt. Bevorzugt ist jedoch eine noch größere Auslenkung, von mindestens dem 0,5-fachen, mindestens dem 0,75-fachen der Abmessungen. Der Verschluss kann auch derart ausgestaltet sein, dass das Druckübertragungselement für eine beschädigungsfreie Auslenkung ausgelegt ist, die mindestens seinen Abmessungen entspricht. Das Druckübertragungselement kann also für eine erhebliche Auslenkung ausgelegt sein, um die zuverlässige biologische Inaktivierung der Mikroorganismen zu ermöglichen.

Eine Weiterbildung der Erfindung sieht vor, dass ein Verhältnis eines Volumens zwischen dem ausgelenkten Druckübertragungselement und einer gedachten Ebene, die das Druckübertragungselement in entspanntem Zustand zumindest teilweise aufnimmt, und einem Oberflächeninhalt des Druckübertragungselements in entspanntem Zustand mindestens 5 mm beträgt. In seinem entspannten Zustand nimmt das Druckübertragungselement die gedachte Ebene zumindest teilweise auf. Beispielsweise liegt ein Rand des Druckübertragungselements durchgehend in der gedachten Ebene. Es kann jedoch auch vorgesehen sein, dass das Druckübertragungselement in seinem entspannten Zustand vollständig in der gedachten Ebene liegt.

In seinem ausgelenkten Zustand, also während der Druckbeaufschlagung, schließt das Druckübertragungselement mit der Ebene ein bestimmtes Volumen ein. Aus einer Division dieses Volumens durch den Oberflächeninhalt des Druckübertragungselements in entspanntem Zustand ergibt sich das Verhältnis. Das Verhältnis soll einen Wert von mindestens 5 mm aufweisen, bevorzugt mindestens 10 mm, mindestens 15 mm oder mehr. Während der Druckbeaufschlagung erfolgt insoweit eine erhebliche Vergrößerung des Volumens, also ein deutliches Auslenken des Druckübertragungselements in das Gefäß hinein. Hierdurch wird ein zuverlässiges biologisches Inaktivieren der Mikroorganismen sichergestellt.

Eine Weiterbildung der Erfindung sieht vor, dass die Strecke, über welche das Druckübertragungselement in der Auslenkungsrichtung beschädigungsfrei auslenkbar ist, bezogen auf Abmessungen des Verschlusses in derselben Richtung mindestens 50 %, mindestens 75 %, mindestens 90 %, mindestens 95 % oder mindestens 100 % beträgt. Das bedeutet, dass das Druckübertragungselement derart ausgestaltet ist, dass es den Verschluss während der Druckbeaufschlagung zu einem erheblichen Teil beschädigungsfrei durchgreifen kann. Beispielsweise erstreckt sich der Grundkörper in der Auslenkungsrichtung von einer ersten Seite bis hin zu einer zweiten Seite, wobei die erste Seite und die zweite Seite den Grundkörper gegenüberliegend begrenzen.

Bevorzugt ist nun das Druckübertragungselement in entspanntem Zustand näher an der ersten Seite als an der zweiten Seite angeordnet, beispielsweise beträgt der Abstand zwischen dem Druckübertragungselement und der ersten Seite bezogen auf den gesamten Abstand zwischen der ersten Seite und der zweiten Seite höchstens 5 % oder höchstens 10 %. Der Verschluss ist derart ausgestaltet, dass das Druckübertragungselement während der Druckbeaufschlagung in Richtung der zweiten Seite ausgelenkt wird und hierbei den Grundkörper in der Auslenkungsrichtung zu mindestens 50 % oder mehr durchgreift. Das Druckübertragungselement kann derart ausgestaltet sein, dass es eine Auslenkung derart zulässt, dass es auf der zweiten Seite des Grundkörpers über den Grundkörper übersteht und insoweit in das Gefäß hineinragt. Es wird also nochmals deutlich, dass das Druckübertragungselement für eine deutliche Auslenkung vorgesehen sein kann.

Eine Weiterbildung der Erfindung sieht vor, dass das Druckübertragungselement aus einem elastischen Material besteht oder elastisch ausgebildet ist. Das Druckübertragungselement ist also in jedem Fall elastisch. Hierzu kann es aus dem elastischen Material, beispielsweise einem Elastomer, hergestellt sein. Zusätzlich oder alternativ resultiert die Elastizität des Druckübertragungselements aus seiner geometrischen Ausgestaltung. Beispielsweise kann hierzu das Druckübertragungselement nach Art eines Faltenbalgs vorliegen oder einen solchen zumindest aufweisen. Die elastische Ausgestaltung des Druckübertragungselements ermöglicht die beschädigungsfreie Auslenkbarkeit des Druckübertragungselements auf besonders einfache Art und Weise.

Eine Weiterbildung der Erfindung sieht vor, dass der Verschluss über einen starren Grundkörper verfügt, an dem das Druckübertragungselement fluiddicht befestigt ist. Auf eine solche Ausgestaltung wurde bereits hingewiesen. Der Grundkörper sorgt für eine zuverlässige und fluiddichte Anbindung des Verschlusses an das Gefäß und hier eine sichere Befestigung des Druckübertragungselements.

Eine Weiterbildung der Erfindung sieht vor, dass das Druckübertragungselement als Druckmembran vorliegt und/oder einen Faltenbalg aufweist. Unter der Druckmembran ist insbesondere eine elastische Membran zu verstehen, welche randseitig, insbesondere durchgehend und unterbrechungsfrei, an dem Grundkörper befestigt ist. Besonders bevorzugt ist die Druckmembran rund. Zusätzlich oder alternativ kann das Druckübertragungselement den Faltenbalg aufweisen. In diesem Fall wird die Elastizität allein oder zumindest teilweise durch die Ausgestaltung als Faltenbalg erzielt. Der Faltenbalg kann also aus einem selbst nicht elastischen Material bestehen oder zumindest bereichsweise oder vollständig aus einem elastischen Material hergestellt sein. Der Faltenbalg kann eine durchgehend gleichbleibende Materialstärke aufweisen.

Es kann vorgesehen sein, dass der Faltenbalg durchgehend aus demselben Material besteht, jedoch derart ausgestaltet ist, dass er bereichsweise eine höhere erste Steifigkeit und bereichsweise eine niedrigere zweite Steifigkeit aufweist. Die unterschiedlichen Steifigkeiten können zum Beispiel durch unterschiedliche Materialstärken erzielt sein, sodass also der Faltenbalg bereichsweise eine größere erste Materialstärke und bereichsweise eine kleinere zweite Materialstärke aufweist. Im Schnitt gesehen, insbesondere im Längsschnitt, ist der Faltenbalg durch eine mäanderartig verlaufende Wand ausgebildet. Hierunter ist zu verstehen, dass gerade Bereiche der Wand durch Krümmungen miteinander verbunden sind, sodass die Bereiche abwechselnd in entgegengesetzte Richtung verlaufen.

Im Schnitt gesehen verlaufen die Längsmittelachsen der geraden Bereiche gegenüber der Längsmittelachse des Verschlusses entweder parallel oder sind ihr gegenüber angewinkelt. Letztlich schließen die Längsmittelachsen der geraden Bereiche mit der Längsmittelachse des Verschlusses oder einer zu dieser parallelen Geraden einen Winkel ein, der mindestens 0° und höchstens 180° beträgt. Beispielsweise ist es in einer ersten Ausgestaltung vorgesehen, dass die Winkel für alle geraden Bereiche entweder mindestens 0° und höchstens 45° betragen, insbesondere größer sind als 0° und höchstens gleich 30° oder höchstens gleich 15°. In einer zweiten Ausgestaltung betragen die Winkel für alle geraden Bereiche mindestens 30° und höchstens 90°, insbesondere mindestens 30° und weniger als 90° oder mindestens 60° und weniger als 90°.

Beispielsweise kann das Druckübertragungselement bereichsweise als Druckmembran und bereichsweise als Faltenbalg ausgestaltet sein. Es kann jedoch auch vorgesehen sein, dass das Druckübertragungselement den Faltenbalg aufweist, welcher jedoch aus dem elastischen Material besteht. Jeder der beschriebenen Ausgestaltungen des Druckübertragungselements stellt eine hinreichende Verlagerbarkeit und damit eine zuverlässige biologische Inaktivierung der Mikroorganismen sicher.

Eine Weiterbildung der Erfindung sieht vor, dass die Druckmembran beschädigungsfrei auf mindestens 200 %, mindestens 250 %, mindestens 300 %, mindestens 400 %, mindestens 500 % oder mindestens 600 % der Fläche dehnbar ist. Besonders bevorzugt sind hierbei die größeren Werte von mindestens 400 % und mehr. Die Druckmembran ist also derart ausgestaltet, dass ihre Oberfläche bezogen auf ihre Oberfläche in entspanntem Zustand durch die Druckbeaufschlagung um die genannten Werte dehnbar ist. Hierdurch wird ein hinreichender Druckausgleich zwischen der Außenumgebung und dem Innenraum des Gefäßes sichergestellt, ohne dass eine Beschädigung des Verschlusses beziehungsweise des Druckübertragungselements auftreten kann.

Eine Weiterbildung der Erfindung sieht vor, dass das Druckübertragungselement ein zentrales Mittelstück aufweist, das über den Faltenbalg auslenkbar an den Grundkörper angebunden ist. Das zentrale Mittelstück liegt mittig in dem Druckübertragungselement, insbesondere mittig in dem Verschluss, vor. Es ist bezüglich des Grundkörpers zur Herstellung des Druckausgleichs auslenkbar. Hierzu ist es über den Faltenbalg an den Grundkörper angebunden. Der Faltenbalg greift insoweit einerseits, beispielsweise in radialer Richtung innen, an dem Mittelstück und andererseits, insbesondere in radialer Richtung außen, an dem Grundkörper an. Hierdurch kann ein zuverlässiges und gleichmäßiges Auslenken des Druckübertragungselements erzielt werden.

Eine Weiterbildung der Erfindung sieht ein an dem Grundkörper ausgebildetes Schraubgewinde zur Befestigung an dem Gefäß vor. Eingangs wurde bereits darauf hingewiesen, dass der

Verschluss bevorzugt mit dem Gefäß verschraubt wird und insoweit als Schraubverschluss ausgestaltet ist. Hierzu liegt an dem Grundkörper das Schraubgewinde vor, wohingegen an dem Gefäß das Gegengewinde ausgebildet sein kann. Das Schraubgewinde liegt beispielsweise als GL40-Gewinde vor. Das Schraubgewinde ermöglicht ein reversibles Befestigen des Verschlusses beziehungsweise des Grundkörpers an dem Gefäß und insoweit ein reversibles Verschließen des Gefäßes. Insbesondere ist es vorgesehen, dass der Verschluss nach seinem Befestigen an dem Gefäß und nach der Druckbeaufschlagung beschädigungsfrei von dem Gefäß lösbar ist. Dies ermöglicht ein einfaches Entnehmen des Stoffs, insbesondere ein einfaches Konsumieren des Stoffs.

Eine Weiterbildung der Erfindung sieht vor, dass der Grundkörper und/oder das Druckübertragungselement aus Metall und/oder Kunststoff bestehen. Bevorzugt besteht der Verschluss insgesamt aus lebensmittelechtem Material beziehungsweise lebensmittelechten Materialien. Grundsätzlich kann das Material Metall oder Kunststoff sein. Beispielsweise besteht der Grundkörper aus einem ersten Material und das Druckübertragungselement aus einem zweiten Material. Es kann also vorgesehen sein, dass der Grundkörper aus Metall und das Druckübertragungselement aus Kunststoff besteht oder umgekehrt. Es kann jedoch auch vorgesehen sein, dass sowohl der Grundkörper als auch das Druckübertragungselement aus Metall oder aus Kunststoff bestehen. Die Verwendung von Metall beziehungsweise Kunststoff ermöglicht eine hinreichend stabile Ausgestaltung des Verschlusses, sodass dieser die beschädigungsfreie Auslenkung des Druckübertragungselements zuverlässig ermöglicht.

Eine Weiterbildung der Erfindung sieht vor, dass der Grundkörper und das Druckübertragungselement einstückig und materiell einheitlich miteinander ausgestaltet sind, oder dass der Grundkörper und das Druckübertragungselement aus unterschiedlichen Materialien bestehen und stoffschlüssig miteinander verbunden sind. In ersterem Fall bestehen der Grundkörper und das Druckübertragungselement aus demselben Material. Sie sind zudem einstückig miteinander ausgeführt, beispielsweise werden sie gemeinsam miteinander hergestellt. Alternativ bestehen der Grundkörper und das Druckübertragungselement aus unterschiedlichen Materialien, wobei diese stoffschlüssig miteinander verbunden sind. Beispielsweise wird der Verschluss in diesem Fall in einen 2K Spritzgießverfahren hergestellt. Die beschriebene Ausgestaltung des Verschlusses kann eine kostengünstige und prozesssichere Ausgestaltung ermöglichen.

Eine Weiterbildung der Erfindung sieht vor, dass der Verschluss als Originalitätsverschluss ausgestaltet ist. Darunter ist zu verstehen, dass der Verschluss derart ausgestaltet ist, dass bei einem Öffnen des Behälters, also bei einem Abnehmen des Verschlusses von dem Gefäß oder auch nur bei einem Verlagern des Verschlusses bezüglich des Gefäßes, eine irreversible Veränderung des Verschlusses erfolgt, welche optisch einfach erkennbar ist. Ein Benutzer beziehungsweise Verbraucher kann insoweit erkennen, ob der Behälter nach der Druckbeaufschlagung bereits geöffnet wurde. Ein solches Öffnen nach der Druckbeaufschlagung würde das Eindringen von neuen Mikroorganismen in den Stoff ermöglichen. Mithilfe des Originalitätsverschlusses kann der Verbraucher nun erkennen, ob er den Stoff gefahrlos konsumieren kann. Entsprechend kann eine besonders hohe Sicherheit gewährleistet werden.

Eine Weiterbildung der Erfindung sieht ein Signalelement vor, das dazu vorgesehen und ausgebildet ist, sich bei einem Überschreiten eines Solldrucks durch einen während der Druckbeaufschlagung vorliegenden Druck irreversibel zu verändern, sodass das Signalelement vor der Drucküberschreitung einen ersten Signalzustand und nach der Drucküberschreitung einen zweiten Signalzustand aufweist. Das Signalelement ermöglicht es, auf einfache Art und Weise zu erkennen, ob der Verschluss bereits der Druckbeaufschlagung unterzogen wurde. Beispielsweise umfasst die irreversible Veränderung eine Formänderung und/oder eine Abmessungsänderung des Signalelements von dem ersten Signalzustand in den zweiten Signalzustand.

Das Signalelement ist derart ausgestaltet, dass bei dem Überschreiten des Solldrucks durch den in der Umgebung des Verschlusses vorliegenden Umgebungsdruck und/oder durch den in dem Innenraum des Gefäßes vorliegenden Innendruck und/oder durch einen Differenzdruck zwischen dem Umgebungsdruck und dem Innendruck die irreversible Veränderung des Signalelements erfolgt. Vor der Drucküberschreitung liegt das Signalelement insoweit in dem ersten Signalzustand und nach der Drucküberschreitung in dem zweiten Signalzustand vor, welche sich voneinander unterscheiden, insbesondere hinsichtlich einer Form, einer Abmessung und/oder einer Farbe des Signalelements. Somit kann der Verbraucher auf einfache Art und Weise erkennen, ob der Verschluss beziehungsweise der Behälter der Druckbeaufschlagung unterzogen wurde. Hierdurch kann die Sicherheit weiter erhöht werden.

Eine Weiterbildung der Erfindung sieht vor, dass das Signalelement ein Rastelement aufweist, das vor dem Überschreiten des Solldrucks formschlüssig mit einem Rastgegenelement zusammenwirkt und derart angeordnet und ausgestaltet ist, dass es bei dem Überschreiten mit dem Rastgegenelement außer Eingriff gerät. Beispielsweise ist das Rastelement gegenüber dem Rastgegenelement zumindest einem Teil der Auslenkung des Druckübertragungselements unterworfen, sodass das Rastelement gegenüber dem Rastgegenelement durch die Druckbeaufschlagung ausgelenkt wird. Das Rastelement und das Rastgegenelement greifen hierbei derart ineinander, dass sie bis zum Erreichen des Solldrucks miteinander in Eingriff stehen und erst bei Überschreiten des Solldrucks außer Eingriff miteinander geraten. Sie sind derart angeordnet und ausgestaltet, dass sie auch bei einem nachfolgenden Unterschreiten des Solldrucks nicht mehr in Eingriff miteinander geraten.

Eine Weiterbildung der Erfindung sieht vor, dass das Signalelement ein Stoffschlusselement aufweist, das vor dem Überschreiten des Solldrucks stoffschlüssig mit einem Stoffschlussgegenelement verbunden und derart angeordnet und ausgestaltet ist, dass die stoffschlüssige Verbindung bei dem Überschreiten des Solldrucks irreversibel gelöst wird. Das Stoffschlusselement ist stoffschlüssig an dem Stoffschlussgegenelement befestigt, beispielsweise über ein einstückig und materialeinheitlich mit dem Stoffschlusselement und dem Stoffschlussgegenelement ausgeführten Verbindungselement. Das Verbindungselement ist derart ausgestaltet, dass es bei dem Überschreiten des Solldrucks zerstört wird, insbesondere reißt das Verbindungselement. Auf diese Art und Weise kann sichergestellt werden, dass der Verbraucher zuverlässig erkennen kann, ob der Verschluss beziehungsweise der Behälter der Druckbeaufschlagung ausgesetzt war.

Eine Weiterbildung der Erfindung sieht vor, dass das Druckübertragungselement von einer Abdeckung übergriffen ist, in welcher eine Druckausgleichsöffnung ausgebildet ist. Die Abdeckung liegt auf der dem Gefäß abgewandten Seite des Verschlusses vor. Die Abdeckung ist beispielsweise Bestandteil des Grundelements. Bevorzugt weist das Grundelement die Abdeckung und ein von der Abdeckung ausgehendes Seitenteil auf, welches zylinderförmig, insbesondere kreiszylinderförmig, ist und zur Befestigung des Verschlusses an dem Gefäß vorgesehen und ausgebildet ist. Besonders bevorzugt liegt an einer Innenwand des Seitenteils ein Schraubgewinde vor, welches zum Aufschrauben des Verschlusses auf das Gefäß dient. Die Abdeckung ist insbesondere derart angeordnet, dass sie eine Auslenkung des Druckübertragungselements lediglich in Richtung des Gefäßes und/oder in dieses hinein zulässt.

In die von dem Gefäß abgewandte Richtung dient die Abdeckung zum Beispiel als Endanschlag für das Druckübertragungselement. Die Druckausgleichsöffnung weist bevorzugt kleinere Abmessungen auf als das Druckübertragungselement. Bevorzugt ist das Druckübertragungselement in seinem entspannten Zustand um einen Faktor von mindestens 5, mindestens 7,5 oder mindestens 10 größer als ein Durchmesser der Druckausgleichsöffnung. Eine derartige Ausgestaltung der Abdeckung dient auch einem Schutz des Druckübertragungselements vor äußeren Einflüssen, insbesondere mechanischen Einflüssen, sodass eine Beschädigung des Druckübertragungselements nach der Druckbeaufschlagung, zum Beispiel während eines Vertriebs des gefüllten Behälters, effektiv verhindert wird.

Eine weitere Ausführung der Erfindung ist auf ein Gefäß gerichtet, wobei das Gefäß ausgelegt ist, mit einem Verschluss wie vorstehend beschrieben verschlossen zu werden.

Ausführungsformen der Erfindung sehen vor, dass das Gefäß als Glasgefäß vorliegt. D.h. dass das Gefäß als Glasgefäß ausgestaltet ist.

Ausführungsformen der Erfindung sehen vor, dass in einem Gefäßkopf des Gefäßes eine Befüllöffnung vorliegt, die mittels des Verschlusses verschlossen ist, wobei Abmessungen der Befüllöffnung mindestens 75 % der größten Abmessungen eines sich an die Befüllöffnung anschließenden Innenraums des Gefäßes in derselben Richtung betragen.

Ausführungsformen der Erfindung sehen vor, dass der Verschluss mit dem Gefäß verschraubbar ist.

Ausführungsformen der Erfindung sehen vor, dass das Gefäß ein Innenvolumen im Bereich von 20 ml bis 2000 ml, vorzugsweise im Bereich von 40 ml bis 1200 ml, weiter vorzugsweise im Bereich von 50 ml bis 500 ml hat.

Ausführungsformen der Erfindung sehen vor, dass das Gefäß eine Gefäß-Längsachse hat, entlang der die Richtungen proximal und distal definiert sind, wobei distal im bestimmungsgemä-βen Gebrauch in Richtung des Verschlusses weist und proximal entgegengesetzt ist.

Ausführungsformen der Erfindung sehen vor, dass das Gefäß einen Verbindungsabschnitt aufweist, der zur Verbindung mit dem Verschluss ausgelegt ist.

Ausführungsformen der Erfindung sehen vor, dass der Verbindungsabschnitt ein distaler Endabschnitt des Gefäßes ist.

Ausführungsformen der Erfindung sehen vor, dass der Verbindungsabschnitt ein Außengewinde aufweist.

Ausführungsformen der Erfindung sehen vor, dass das Gefäß ausgelegt ist, mit einem Verschluss, der einen Grundkörper mit mindestens einem Originalitätselement aufweist, verbunden zu werden. Dann kann der Verbindungsabschnitt mindestens ein Gegenelement aufweisen, das dazu ausgelegt ist, mit dem mindestens einen Originalitätselement zusammenzuwirken.

Ausführungsformen der Erfindung sehen vor, dass das mindestens eine Gegenelement eine Mehrzahl von Gegenelemente ist.

Ausführungsformen der Erfindung sehen vor, dass die Gegenelement zwei Gegenelemente umfassen, die bezüglich der Gefäß-Längsachse um 180° zueinander verschoben angeordnet sind.

Ausführungsformen der Erfindung sehen vor, dass jedes der Gegenelemente an der gleichen Position entlang der Gefäß-Längsachse angeordnet ist. In anderen Worten können die Gegenelemente auf der gleichen Höhe am Gefäß angeordnet sein.

Ausführungsformen der Erfindung sehen vor, dass jedes des mindestens einen Gegenelementes als Rampenelement ausgestaltet ist.

Gegenelemente, die eines oder mehrere der vorstehend beschriebenen Ausbildungen aufweisen, können besonders geeignet sein, um mit den beschriebenen Originalitätselementen zusammenzuwirken, und so eine Originalität sicher gewährleisten.

Ausführungsformen der Erfindung sehen vor, dass das mindestens eine Gegenelement proximal vom Außengewinde angeordnet ist.

Ausführungsformen der Erfindung sehen vor, dass wobei der Verbindungsabschnitt eine Länge entlang der Gefäß-Längsachse hat, die im Bereich von 5 mm bis 25 mm, vorzugsweise im Bereich von 8 mm bis 20 mm, weiter vorzugsweise im Bereich von 10 mm bis 15 mm liegt.

Ausführungsformen der Erfindung sehen vor, dass ein distales Ende des Verbindungsabschnitts als ebene Ringfläche ausgestaltet ist.

Eine darüber hinausgehend Ausführung der Erfindung betrifft auch einen Behälter mit einem Gefäß und mit einem das Gefäß fluiddicht verschließenden Verschluss, wobei der Verschluss über ein fluiddichtes Druckübertragungselement verfügt, das durch Druckbeaufschlagung beschädigungsfrei zur biologischen Inaktivierung von in dem Stoff vorliegenden Mikroorganismen auslenkbar ist.

Es dürfte verständlich sein, dass der Behälter Vorteile aufweist, die den vorstehend beschriebenen Vorteilen entsprechen.

Ausführungsformen der Erfindung sehen vor, dass der Verschluss mit dem Gefäß verschraubt ist.

Die Erfindung sieht vor, dass das Druckübertragungselement klemmend zwischen dem Gefäß und dem Grundkörper gehalten ist.

Ausführungsformen der Erfindung sehen vor, dass sich der Faltenbalg in das Gefäß hinein erstreckt.

Die Erfindung sieht vor, dass das mindestens eine Originalitätselement unbeschädigt ist.

In anderen Worten betreffen Ausführungsformen der Erfindung auch einen Behälter mit einem Gefäß und mit einem das Gefäß fluiddicht verschließenden Verschluss, insbesondere einem Verschluss gemäß den Ausführungen im Rahmen dieser Beschreibung. Dabei ist vorgesehen, dass der Verschluss über einen starren Grundkörper und ein fluiddicht an dem Grundkörper befestigtes und fluiddichtes Druckübertragungselement verfügt, das durch Druckbeaufschlagung beschädigungsfrei zur biologischen Inaktivierung von in dem Stoff vorliegenden Mikroorganismen auslenkbar ist.

Auf die Vorteile einer derartigen Ausgestaltung des Behälters beziehungsweise des Verschlusses wurde bereits hingewiesen. Sowohl der Behälter als auch der Verschluss können gemäß den Ausführungen im Rahmen dieser Beschreibung weitergebildet sein, sodass insoweit auf diese verwiesen wird.

Der Behälter verfügt über das Gefäß und den Verschluss. Das Gefäß ist mithilfe des Verschlusses fluiddicht verschließbar. Das Gefäß und somit der Behälter dienen der Aufnahme des Stoffs und sind hierzu entsprechend ausgestaltet. In jedem Fall sind das Gefäß sowie der Verschluss fluiddicht ausgestaltet. Der Verschluss ermöglicht auf die bereits erläuterte Art und Weise den Druckausgleich zwischen der Außenumgebung und dem Innenraum des Behälters mittels des Druckübertragungselements, sodass durch eine Druckbeaufschlagung des Behälters in dem Innenraum ein Innendruck bereitgestellt werden kann, bei welchem eventuell in dem Innenraum vorliegende Mikroorganismen inaktiviert werden.

Eine Weiterbildung der Erfindung sieht vor, dass das Gefäß als Glasgefäß vorliegt. Das Gefäß besteht insoweit zumindest bereichsweise, bevorzugt jedoch vollständig, aus Glas. Das Glasgefäß schließt den Innenraum gemeinsam mit dem Verschluss ein und grenzt ihn gegenüber der Außenumgebung ab. Das Glasgefäß liegt beispielsweise in Form eines Hohlzylinders, bevorzugt eines Hohlkreiszylinders, vor. Das Glasgefäß kann insoweit auch als Hohlglas bezeichnet werden. Die Verwendung von Glas als Material für das Gefäß hat den Vorteil, dass Lebensmittelechtheit auf einfache Art und Weise sichergestellt ist. Im Gegensatz zu anderen Materialien, insbesondere Kunststoffen, kommt es nicht zu einer - wenn auch geringen - Absonderung von Schadstoffen in den Stoff. Zudem wird durch die Verwendung des Glasgefäßes ein äußerst gefälliger optischer Eindruck erzielt.

Eine Weiterbildung der Erfindung sieht vor, dass in einem Gefäßkopf des Gefäßes eine Befüllöffnung vorliegt, die mittels des Verschlusses verschlossen ist, wobei Abmessungen der Befüllöffnung mindestens 75 % der Größenabmessungen eines sich an die Befüllöffnung anschließenden Innenraums in derselben Richtung betragen. Unter dem Gefäßkopf ist derjenige Bereich des Gefäßes zu verstehen, an welchem der Verschluss angeordnet und befestigt wird. Der Gefäßkopf schließt die Befüllöffnung ein beziehungsweise bildet die Befüllöffnung aus. Im Schnitt gesehen begrenzt der Gefäßkopf die Befüllöffnung vollständig und durchgehend. Die Befüllöffnung ist mithilfe des Verschlusses verschlossen oder zumindest verschließbar. An die Befüllöffnung schließt sich der Innenraum an, welcher von dem Gefäß gemeinsam mit dem Verschluss begrenzt wird.

Im Schnitt gesehen sind die Abmessungen der Befüllöffnung nun nahezu ebenso groß wie die Abmessungen des Innenraums an derjenigen Stelle, an welcher er seine größten Abmessungen in derselben Richtung aufweist. Zumindest betragen die Abmessungen der Befüllöffnung mindestens 75 % der Abmessungen des Innenraums. Die Abmessungen der Befüllöffnung und die Abmessungen des Innenraums werden bevorzugt in zueinander parallelen gedachten Ebenen ermittelt. Die der Befüllöffnung zugeordnete gedachte Ebene ist hierbei beispielsweise derart angeordnet, dass sie einen die Befüllöffnung begrenzenden Rand in Umfangsrichtung durchgehend aufnimmt. Anders ausgedrückt nimmt die gedachte Ebene einen das Gefäß endseitig begrenzenden Rand durchgehend auf. Es wird deutlich, dass die Befüllöffnung vergleichsweise große Abmessungen aufweist und das sich der Innenraum gegenüber der Befüllöffnung allenfalls geringfügig aufweitet. Hierdurch kann sichergestellt werden, dass über das Druckübertragungselement ein zuverlässiger Druckausgleich zwischen der Außenumgebung und dem Innenraum erzielbar ist.

Eine Weiterbildung der Erfindung sieht vor, dass der Verschluss mit dem Gefäß verschraubt oder verschraubbar ist. Hierauf wurde vorstehend bereits hingewiesen. Der Schraubverschluss ermöglicht ein reversibles Verschließen des Behälters, sodass nach der Druckbeaufschlagung der Verschluss beschädigungsfrei oder zumindest nahezu beschädigungsfrei von dem Gefäß entfernt werden kann.

Eine Weiterbildung der Erfindung sieht vor, dass das bei mit dem Verschluss verschlossenem Gefäß das Druckübertragungselement klemmend zwischen dem Gefäß und dem Grundkörper gehalten ist. In diesem Zustand liegt also das Druckübertragungselement einerseits an dem Gefäß, insbesondere einem dem Grundkörper zugewandten Rand des Gefäßes, und andererseits an dem Grundkörper an. Der Deckel ist bevorzugt derart an dem Gefäß angeordnet und/oder befestigt, dass der Grundkörper das Druckübertragungselement permanent in Richtung des Gefäßes beziehungsweise an das Gefäß drängt. Beispielsweise erfolgt das Befestigen des Verschlusses an dem Gefäß derart, dass der zwischen dem Gefäß und dem Grundkörper befindliche Bereich des Druckübertragungselements komprimiert wird, insbesondere elastisch komprimiert wird. In jedem Fall kann das Druckübertragungselement bei einer derartigen Ausgestaltung eine Dichtfunktion übernehmen, also das Gefäß und das Grundelement dichtend verbinden, sodass ein Entweichen des Inhalts des Behälters zwischen dem Gefäß und dem Grundelement hindurch zuverlässig verhindert werden kann.

Auch ist eine Ausführung der Erfindung auf ein Verfahren gemäß dem Anspruch 12 zum Befüllen eines Behälters mit einem Stoff gerichtet, wobei der Behälter ein Gefäß und einen Verschluss zum fluiddichten Verschlie-βen des Gefäßes aufweist, wobei der Verschluss über ein fluiddichtes Druckübertragungselement verfügt und nach einem Einbringen des Stoffs in das Gefäß und nach einem Verschließen des Gefäßes mittels des Verschlusses das Druckübertragungselement durch Druckbeaufschlagung beschädigungsfrei zur biologischen Inaktivierung von in dem Stoff vorliegenden Mikroorganismen ausgelenkt wird.

Ausführungsformen der Erfindung sehen vor, dass das Verschließen des Gefäßes mittels des Verschlusses die folgenden Schritte umfasst: Anbringen des Druckübertragungselementes am Gefäß und Anbringen des Grundkörpers am Gefäß.

Ausführungsformen der Erfindung sehen vor, dass die Schritte Anbringen des Druckübertragungselementes am Gefäß und Anbringen des Grundkörpers am Gefäß gleichzeitig ausgeführt werden.

Ausführungsformen der Erfindung sehen vor, dass der Schritt Anbringen des Grundkörpers am Gefäß nach dem Schritt Anbringen des Druckübertragungselementes am Gefäß ausgeführt wird. Gerade die Ausführung des Verfahrens, in dem diese Schritte nacheinander ausgeführt werden kann zu einem besonders einfachen automatisierten Verfahren führen. Ausführungsformen der Erfindung sehen vor, dass das Verfahren ferner umfasst Einklemmen des Druckübertragungselementes zwischen dem Gefäß und dem Grundkörper.

In anderen Worten betreffen Ausführungsformen der Erfindung auch ein Verfahren zum Befüllen eines Behälters mit einem Stoff, wobei der Behälter ein Gefäß und einen Verschluss zum fluiddichten Verschließen des Gefäßes aufweist, insbesondere einen Verschluss gemäß den Ausführungen im Rahmen dieser Beschreibung. Dabei ist vorgesehen, dass der Verschluss über einen starren Grundkörper und ein fluiddicht an dem Grundkörper befestigtes und fluiddichtes Druckübertragungselement verfügt und nach einem Einbringen des Stoffs in das Gefäß und nach einem Verschließen des Gefäßes mittels des Verschlusses das Druckübertragungselement durch Druckbeaufschlagung beschädigungsfrei zur biologischen Inaktivierung von in dem Stoff vorliegenden Mikroorganismen ausgelenkt wird.

Erneut wird hinsichtlich der Vorteile und möglicher vorteilhafter Ausgestaltungen des Verschlusses und/oder des Behälters sowie der Vorgehensweise zum Befüllen des Behälters auf die Ausführungen im Rahmen dieser Beschreibung hingewiesen.

Grundsätzlich sind zum Befüllen des Behälters mit dem Stoff also die folgenden Schritte vorgesehen: Zunächst wird das Gefäß bereitgestellt und der Stoff in den Gefäßinnenraum eingebracht. Anschließend wird das Gefäß mit dem Verschluss fluiddicht verschlossen. Das Einbringen des Stoffs in den Gefäßinnenraum und das Verschließen des Gefäßes mit dem Verschluss erfolgen beispielsweise bei einem ersten Druck, welcher insoweit nachfolgend auch in dem Innenraum des Gefäßes vorliegt.

Anschließend wird der Behälter druckbeaufschlagt. Dies erfolgt derart, dass das Druckübertragungselement des Verschlusses beschädigungsfrei ausgelenkt wird, nämlich in Richtung des Innenraums, insbesondere in dem Innenraum hinein. Hierdurch erfolgt eine Druckerhöhung in dem Innenraum. Beispielsweise erfolgt die Druckbeaufschlagung durch ein Erhöhen eines Umgebungsdrucks über den ersten Druck hinaus. Mittels des Druckübertragungselements wird ein Druckausgleich zwischen der Außenumgebung und dem Innenraum erzielt, sodass der in dem Innenraum des Gefäßes vorliegende Innendruck ebenfalls erhöht wird.

Beispielsweise wird die Druckbeaufschlagung derart durchgeführt, dass sich in dem Innenraum ein Innendruck in Form eines zweiten Drucks einstellt, welcher um einen Faktor von mindestens 1.000 größer ist als der erste Druck. Bevorzugt ist der Faktor jedoch größer und beträgt beispielsweise mindestens 3.000, mindestens 4.000, mindestens 5.000 oder mindestens 6.000. Alternativ erfolgt die Druckbeaufschlagung derart, dass der in dem Innenraum vorliegende Druck mindestens 4.000 bar, mindestens 5.000 bar, mindestens 6.000 bar, mindestens 7.000 bar oder mindestens 8.000 bar beträgt. Bei einem derartigen Druck werden eventuell in dem Stoff vorliegende Mikroorganismen biologisch inaktiviert, sodass eine lange Haltbarkeit des Stoffs sichergestellt ist.

Eine Weiterbildung der Erfindung sieht vor, dass der Behälter nach dem Verschließen in einer Druckkammer angeordnet wird und die Druckkammer mit Druck beaufschlagt wird, der derart gewählt ist, dass die in dem Stoff vorliegenden Mikroorganismen inaktiviert werden. Hierauf wurde vorstehend bereits hingewiesen. Die Druckkammer ist derart ausgestaltet, dass in ihr die Druckbeaufschlagung vorgenommen werden kann. Die Verwendung der Druckkammer hat den Vorteil, dass kein unmittelbarer mechanischer Einfluss auf den Behälter und insbesondere auf das Druckübertragungselement erfolgen muss, um die Druckbeaufschlagung vorzunehmen. Vielmehr reicht es aus, die Druckkammer mit Druck zu beaufschlagen, der derart gewählt ist, dass der sich in dem Innenraum des Gefäßes einstellende Druck zur Inaktivierung der Mikroorganismen hinreichend ist.

Eine Weiterbildung der Erfindung sieht vor, dass der Druck mindestens 4.000 bar, mindestens 5.000 bar, mindestens 6.000 bar, mindestens 7.000 bar oder mindestens 8.000 bar beträgt. Hierauf wurde vorstehend bereits hingewiesen. Zusätzlich oder alternativ beträgt die Zeitdauer, über welche der Druck während der Druckbeaufschlagung aufrechterhalten wird, mindestens 5 Minuten, mindestens 10 Minuten oder mindestens 15 Minuten. Hierdurch wird üblicherweise eine zuverlässige biologische Inaktivierung der Mikroorganismen in einem hinreichenden Ausmaß sichergestellt. Sowohl der Druck als auch die Zeitdauer können jedoch selbstverständlich in Abhängigkeit von dem Inhalt des Gefäßes, also des Stoffs, und auch der Menge des Stoffs gewählt werden. Für unterschiedliche Stoffe und unterschiedliche Mengen desselben können unterschiedliche Drücke und/oder unterschiedliche Zeitdauern notwendig sein.

Eine Weiterbildung der Erfindung sieht vor, dass der Behälter einer von mehreren Behältern ist, die in der Druckkammer angeordnet werden, sodass die mehreren Behälter gleichzeitig mit Druck beaufschlagt werden. Es ist also vorgesehen, die Druckkammer zu öffnen und die mehreren Behälter in sie einzubringen. Nachfolgend wird die Druckkammer verschlossen, wobei die Behälter in ihr angeordnet verbleiben. Dann wird die Druckkammer mit Druck beaufschlagt. Anschließend wird die Druckkammer geöffnet und die Behälter aus ihr entnommen. Diese Vorgehensweise hat den Vorteil, dass eine äußerst hohe Prozesssicherheit gegeben ist, weil die mehreren Behälter dem gleichen Druck ausgesetzt sind.

Eine Weiterbildung der Erfindung sieht vor, dass eine Menge des in das Gefäß eingebrachten Stoffs derart bestimmt und das Gefäß derart mit dem Verschluss verschlossen wird, dass in dem Gefäß zusätzlich zu dem Stoff ein Gas eingeschlossen ist. In anderen Worten wird das Gefäß also nicht vollständig mit dem Stoff gefüllt, sondern neben dem Stoff liegt das Gas in dem Gefäß vor, nachdem es mit dem Verschluss verschlossen wurde. Das Gas ist beispielsweise Luft, insbesondere gereinigte und/oder gefilterte Luft. Es kann jedoch auch ein von Luft verschiedenes Gas verwendet werden, in Abhängigkeit von dem Stoff beispielsweise ein Edelgas. Das Einbringen des Gases in das Gefäß hat den Vorteil eines Druckausgleichs in dem Innenraum nach dem Verschließen des Gefäßes mit dem Verschluss.

Eine Weiterbildung der Erfindung sieht vor, dass die Menge des in dem Gefäß eingeschlossenen Gases mindestens 1 %, mindestens 2 %, mindestens 3 %, mindestens 4 % oder mindestens 5 %, und höchstens 10 %, höchstens 7,5 % oder höchstens 5 % der Menge des in das Gefäß eingebrachten Stoffs beträgt. Nach dem Verschließen des Gefäßes mit dem Verschluss ist die Menge des in dem Gefäß vorliegenden Gases deutlich geringer als die Menge des in dem Gefäß vorliegenden Stoffs. Die Menge des Gases entspricht gleichzeitig mindestens einem der zuerst genannten Werte und höchstens einem der zuletzt genannten Werte. Hierdurch wird ein hoher Füllgrad des Gefäßes mit dem Stoff erzielt. Gleichzeitig ist die Menge des Gases hinreichend, um temperaturbedingte Druckschwankungen innerhalb des Gefäßes auszugleichen.

Eine Weiterbildung der Erfindung sieht vor, dass der Druck derart bestimmt wird, dass bei der Druckbeaufschlagung das Gas und der Stoff jeweils komprimiert werden, wobei ein Komprimieren des Stoffs um mindestens 2,5 %, mindestens 5 %, mindestens 7,5 % oder mindestens 10 % erfolgt. Unter dem Druck ist der bei der Druckbeaufschlagung verwendete Druck in der Außenumgebung des Behälters zu verstehen, also insbesondere der in der Druckkammer vorliegende Druck. Der Druck wird so gewählt, dass sowohl eine Volumenreduzierung des Gases als auch eine Volumenreduzierung des Stoffs auftritt. Die durch das Komprimieren des Stoffs erzielte Volumenreduzierung des Stoffs soll mindestens 2,5 % oder mehr betragen. Da das Gas üblicherweise stärker komprimierbar ist als der Stoff, ist die für das Gas bewirkte Volumenreduzierung größer und beträgt beispielsweise mindestens 80 %, mindestens 90 % oder mindestens 95 %. Durch das Komprimieren sowohl des Gases als auch des Stoffs kann ein effektives Inaktivieren der Mikroorganismen erzielt werden.

Eine Weiterbildung der Erfindung sieht vor, dass die Druckkammer zur Druckbeaufschlagung mit einem flüssigen Fluid gefüllt wird. Um die bereits genannten hohen Drücke oder weiteres erreichen zu können, wird das flüssige Fluid verwendet, beispielsweise Wasser. Über dieses kann die Druckbeaufschlagung äußerst effektiv und effizient vorgenommen werden. Insbesondere überträgt das Fluid in dem flüssigen Aggregatzustand den Druck nahezu direkt und vor allem nahezu ohne selbst komprimiert zu werden.

Eine Weiterbildung der Erfindung sieht vor, dass die Druckbeaufschlagung bei einer Temperatur von höchstens 30 °C, höchstens 25 °C, höchstens 20 °C, höchstens 15 °C oder höchstens 10 °C erfolgt. Die biologische Inaktivierung der Mikroorganismen soll allein oder zumindest im Wesentlichen allein durch die Druckbeaufschlagung erfolgen, insbesondere jedoch nicht mittels einer Pasteurisierung durch Temperaturbeaufschlagung. Während der Druckbeaufschlagung wird daher sichergestellt, dass die Temperatur niedrig bleibt und höchstens einem der genannten Werte entspricht. Unter der Temperatur ist insbesondere die Temperatur des Stoffs zu verstehen. Hierdurch wird eine hohe Qualität des in dem Gefäß befindlichen Stoffs sichergestellt.

Eine weitere Ausführung der Erfindung ist auch allgemein auf einen Verschluss zum Verschlie-βen eines mit einem Stoff gefüllten Gefäßes gerichtet.

Ausführungsformen der Erfindung sehen vor, dass der Verschluss starr ist. Ausführungsformen der Erfindung sehen vor, dass an dem Verschluss ein Schraubgewinde zur Befestigung an dem Gefäß ausgebildet ist.

Ausführungsformen der Erfindung sehen vor, dass das Schraubgewinde als Innengewinde ausgestaltet ist.

Ausführungsformen der Erfindung sehen vor, dass der Verschluss eine Verschluss-Längsachse hat, entlang der die Richtungen proximal und distal definiert sind, wobei proximal im bestimmungsgemäßen Gebrauch zu einem Inneren des Gefäßes hinweist und distal entgegengesetzt ist.

Ausführungsformen der Erfindung sehen vor, dass das Schraubgewinde die Verschluss-Längsachse um mehr als 250°, vorzugsweise um mehr als 300°, weiter vorzugsweise um mehr als 350° umläuft.

Ausführungsformen der Erfindung sehen vor, dass das Schraubgewinde die Verschluss-Längsachse um nicht mehr als 450°, vorzugsweise um nicht mehr als 430°, weiter vorzugsweise um nicht mehr als 400° umläuft.

Die Erfindung sieht vor, dass der Verschluss mindestens ein Originalitätselement aufweist.

Die Erfindung sieht vor, dass das mindestens eine Originalitätselement eine Mehrzahl von Originalitätselementen ist.

Ausführungsformen der Erfindung sehen vor, dass die Mehrzahl von Originalitätselementen zwei Originalitätselemente umfasst, die bezüglich der Verschluss-Längsachse um 180° zueinander verschoben angeordnet sind.

Ausführungsformen der Erfindung sehen vor, dass jedes Originalitätselement eine Keilstruktur aufweist.

Ausführungsformen der Erfindung sehen vor, dass jedes Originalitätselement einen Hinterschnitt an einem breiteren Ende der Keilstruktur aufweist.

Ausführungsformen der Erfindung sehen vor, dass jedes Originalitätselement einen Sollbruchbereich aufweist.

Ausführungsformen der Erfindung sehen vor, dass direkt proximal und direkt distal von jedem Originalitätselement kein Material des Verschlusses vorgesehen ist.

Die Erfindung sieht vor, dass der Verschluss ausgelegt ist, ohne Beschädigung des mindestens einen Originalitätselementes an dem Gefäß angebracht zu werden und mit einer Beschädigung mindestens eines des mindestens einen Originalitätselementes von dem Gefäß getrennt zu werden.

Ausführungsformen der Erfindung sehen vor, dass das mindestens eine Originalitätselement proximal vom Schraubgewinde angeordnet ist.

Die Erfindung sieht vor, dass mindestens zwei der Originalitätselemente an unterschiedlichen Positionen entlang der Verschluss-Längsachse angeordnet sind. Ausführungsformen der Erfindung sehen vor, dass der Verschluss eine Gesamthöhe entlang der Verschluss-Längsachse hat, die im Bereich von 8 mm bis 20 mm, vorzugsweise im Bereich von 10 mm bis 15 mm, weiter vorzugsweise im Bereich von 12 mm bis 14 mm liegt. Ausführungsformen der Erfindung sehen vor, dass der Verschluss materialeinheitlich ausgestaltet ist.

Ausführungsformen der Erfindung sehen vor, dass der Verschluss spritzgegossen ist. Ausführungsformen der Erfindung sehen vor, dass der Verschluss ein Mantelelement und eine Deckelfläche aufweist, wobei die Deckelfläche vorzugsweise keine Öffnung aufweist. Ausführungsformen der Erfindung sehen vor, dass das Mantelelement einen distalen Bereich und einen sich daran anschließenden proximalen Abschnitt aufweist.

Ausführungsformen der Erfindung sehen vor, dass der distale Bereich zur besseren Handhabung strukturiert ist.

Ausführungsformen der Erfindung sehen vor, dass der proximale Abschnitt entlang der Verschluss-Längsachse eine Länge von 2 mm bis 10 mm, vorzugsweise 3 mm bis 7 mm, weiter vorzugsweise 4 mm bis 6 mm hat.

Ausführungsformen der Erfindung sehen vor, dass das mindestens eine Originalitätselemente im proximalen Abschnitt vorgesehen ist.

Ausführungsformen der Erfindung sehen vor, dass der Verschluss so ausgelegt ist, dass das mindestens eine durch Trennung vom Gefäß beschädigte Originalitätselement am Rest des Verschlusses befestigt ist.

Ausführungsformen der Erfindung sehen vor, dass der distale Bereich entlang der Verschluss-Längsachse eine axiale Länge im Bereich von 4 mm bis 15 mm, vorzugsweise im Bereich von 6 mm bis 10 mm, weiter vorzugsweise im Bereich von 7 mm bis 9 mm aufweist.

Die Erfindung ist auch auf einen Behälter mit einem Verschluss wie vorstehend beschrieben gerichtet. Der Behälter weist zusätzlich ein Gefäß auf, das die hierin beschriebenen Eigenschaften aufweisen kann, wobei verständlich sein dürfte, dass dieses Gefäß ausgelegt ist, (insbesondere flüssigkeitsdicht) mit dem zuletzt beschrienen Verschluss verschlossen zu werden und nicht notwendigerweise auch mit einem Verschluss mit Druckübertragungselement verschlossen werden kann. Gleichwohl kann es aber die weiteren Merkmale (beispielsweise die Merkmale, die sich auf die Wechselwirkung mit dem mindestens einen Originalitätselement beziehen) aufweisen, die vorstehend mit Bezug auf das Gefäß, welches mit einem Verschluss mit Druckübertragungselement verbindbar ist, beschrieben wurden. Weiterhin ist eine Ausführung der Erfindung auch auf ein entsprechend ausgestaltetes Gefäß gerichtet.

D.h. dass der Verschluss und der Behälter nicht notwendigerweise mit einem Druckübertragungselement ausgestaltet sein müssen. Insbesondere haben sich einige der hierin beschriebenen Ausführungsformen - beispielsweise die Ausgestaltung der Originalitätselemente und des entsprechenden Abschnittes des Gefäßes auch bei anderen Behälter und Verschlüssen, die ohne Druckübertragungselement ausgestaltet sind, als vorteilhaft erwiesen.

Die Erfindung wird nachfolgend anhand der in den Zeichnungen dargestellten Ausführungsbeispiele erläutert, ohne dass eine Beschränkung der Erfindung erfolgt. Dabei zeigt:
- Figur 1: eine schematische Darstellung eines Behälters für einen Stoff, mit einem Gefäß und einem Verschluss,
- Figur 2: eine schematische Darstellung eines nicht erfindungsgemäßen Verschlusses mit einigen Merkmalen der Erfindung, sowie
- Figur 3: eine schematische Darstellung eines nicht erfindungsgemäßen Verschlusses mit einigen Merkmalen der Erfindung,
- Figur 4: eine schematische Darstellung eines nicht erfindungsgemäßen Verschlusses mit einigen Merkmalen der Erfindung, sowie
- Figur 5: eine schematische Darstellung eines Behälters mit einem nicht erfindungsgemäßen Verschluss mit einigen Merkmalen der Erfindung;
- Figur 6a-6d: verschiedene Ansichten eines Behälters in einer erfinderischen Ausführungsform, wobei Fig. 6a den Behälter in einer perspektivischen Ansicht, Fig. 6b den Behälter in einer Draufsicht in Explosionsansicht, Fig. 6c den Behälter in einem Querschnitt und Fig. 6d eine vergrößerte Ansicht des Bereichs B der Fig. 6c darstellt (wobei die Fig. 6d ihrerseits rechts über eine vergrößere Ansicht des Bereichs C verfügt);
- Fig. 7a-7e der Fig. 6a-6d,: verschiedene Ansichten eines Gefäßes des Behälters der Ausführungsform wobei Fig. 7a eine erste perspektivische Ansicht darstellt, Fig. 7b eine zweite perspektivische Ansicht darstellt, die gegenüber der Fig. 7a um 90° um eine Längsachse gedreht ist, Fig. 7c eine erste Draufsicht darstellt, Fig. 7d einen Querschnitt entlang A-A in Fig. 7c und Fig. 7e eine zweite Draufsicht darstellt, die bezüglich der Draufsicht der Fig. 7c um 90° entlang der Längsachse gedreht ist;

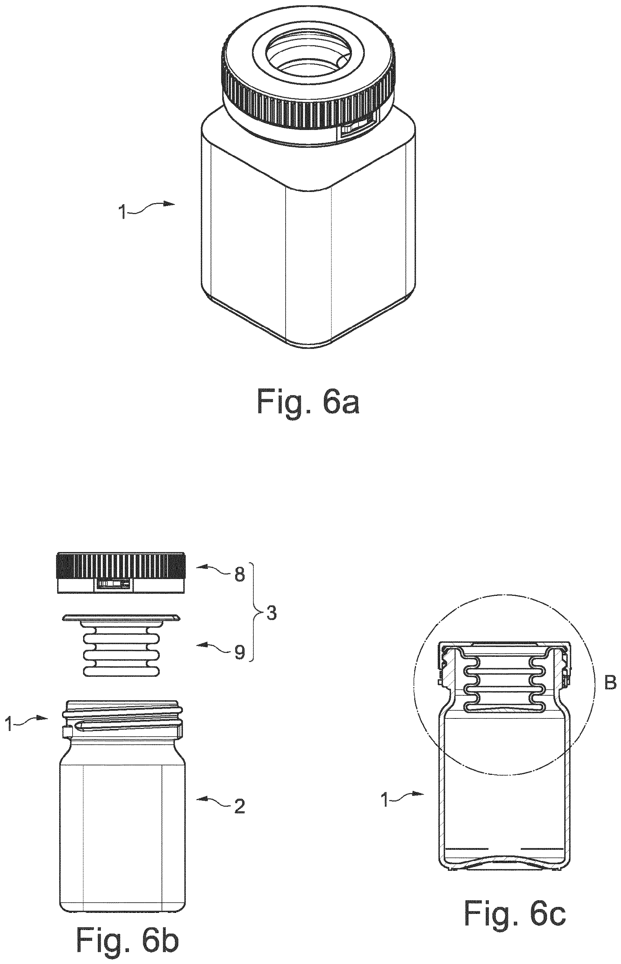

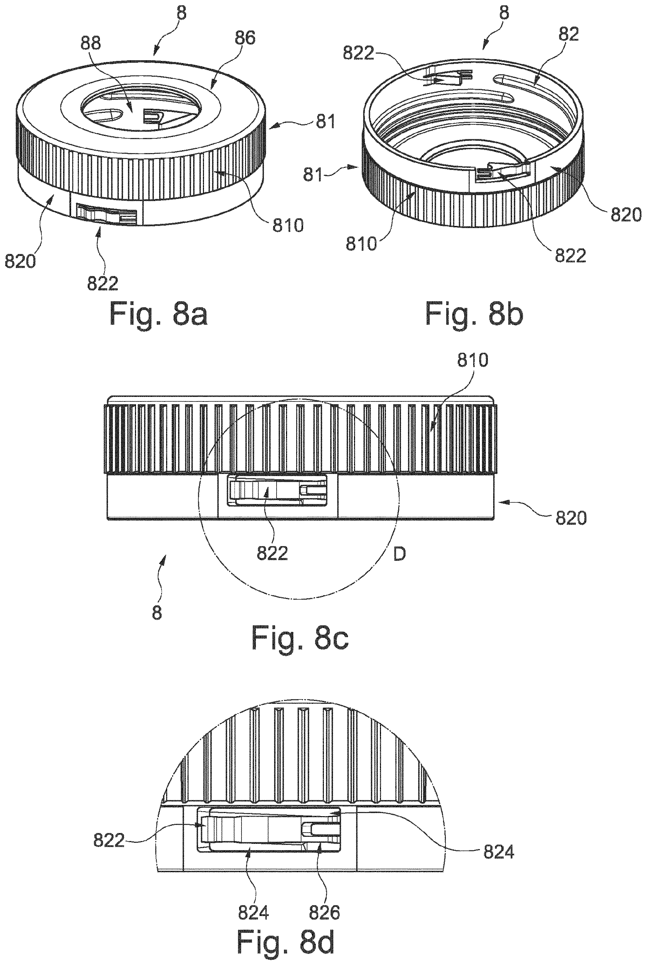

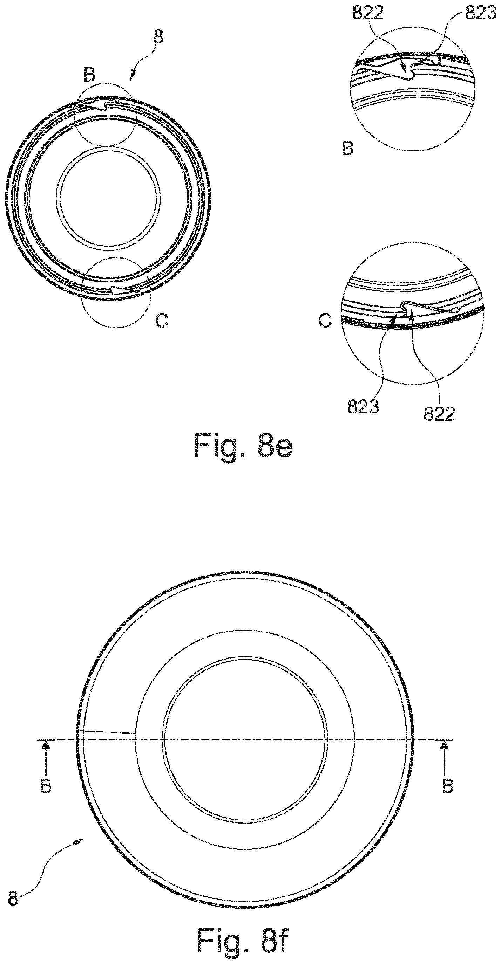

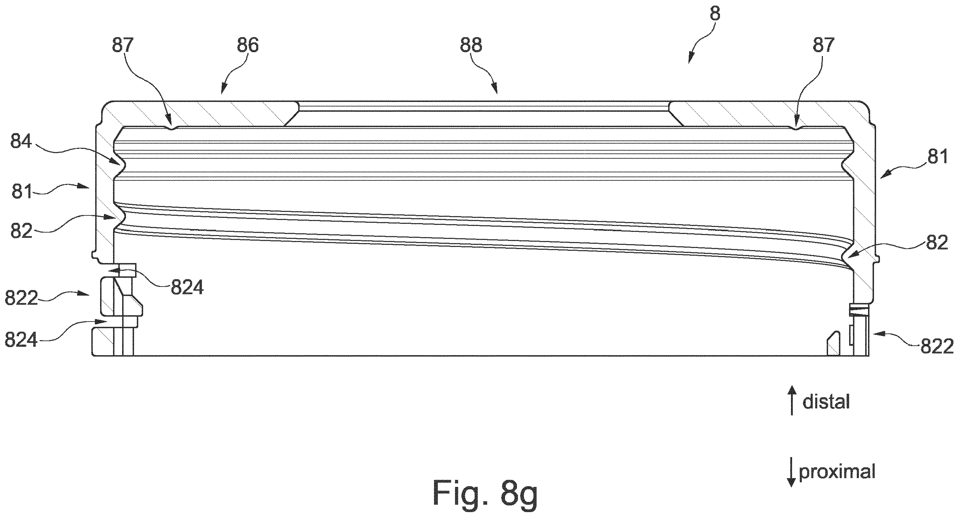

- Fig. 8a-8g: verschiedene Ansichten eines Grundkörpers eines Verschlusses des Behälters der Ausführungsform der Fig. 6a-6d, wobei die Figuren 8a und 8b verschiedene perspektivische Ansichten des Grundkörpers darstellen, Fig. 8c eine seitliche Draufsicht auf den Grundkörper darstellt, Fig. 8d eine vergrößerte Ansicht des Bereichs D der Fig. 8c ist, die Figuren 8e verschiedene Draufsichten auf eine Unterseite des Grundkörpers darstellen (wobei die rechten Ansichten vergrößerte Ansichten der Bereiche B und C der linken Ansicht sind), Fig. 8f eine Draufsicht auf eine Oberseite des Grundkörpers darstellt, und Fig. 8g einen Querschnitt entlang der in Fig. 8f dargestellten Schnittebene darstellt;
- Fig. 9a-9c: verschiedene Ansichten eines Druckübertragungselementes eines Verschlusses eines Behälters der Ausführungsform der Fig. 6a-6d, wobei Fig. 9a eine perspektivische Ansicht des Druckübertragungselement darstellt, Fig. 9b eine Draufsicht auf das Druckübertragungselement darstellt und Fig. 9c einen Querschnitt entlang C-C in Fig. 9b darstellt;
- Fig. 10: ein Flussdiagramm eines Verfahrens nach einer Ausführungsform der Erfindung.

Bezüglich der Figuren wird darauf hingewiesen, dass nicht alle Bezugszeichen in allen Figuren gezeigt sind. Stattdessen verfügen einige der Figuren im Sinne einer übersichtlichen Darstellung nicht über alle Bezugszeichen.

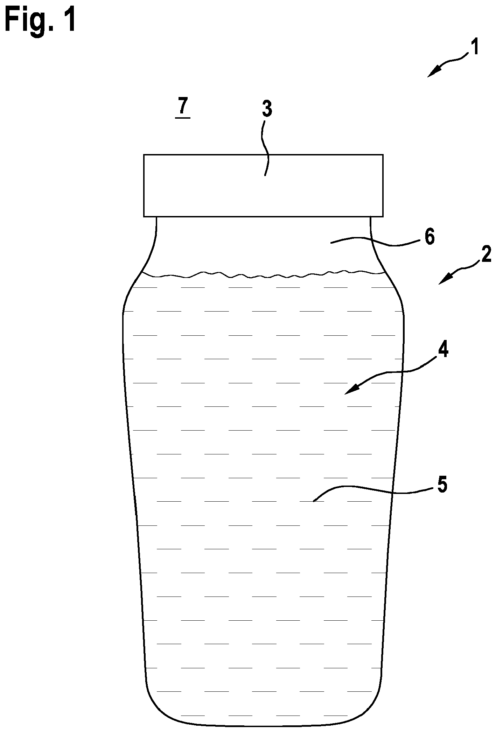

Die Figur 1 zeigt eine schematische Darstellung eines Behälters 1, welcher ein Gefäß 2 und einen Verschluss 3 aufweist. Das Gefäß 2 und der Verschluss 3 schließen gemeinsam einen Innenraum 4 ein, in welchem ein Stoff 5, hier eine Flüssigkeit, sowie ein Gas 6 vorliegen. Die Flüssigkeit 5 ist beispielsweise ein Getränk, insbesondere ein Frucht- und/oder Gemüsesaft. Das Gas 6 ist insbesondere Luft. Bei einem Befüllen des Behälters 1 ist es vorgesehen, die Flüssigkeit 5 und das Gas 6 in den Innenraum 4 einzubringen und anschließend den Verschluss 3 an dem Gefäß 2 zu befestigen. Der Verschluss 3 ist beispielsweise ein Schraubverschluss, sodass entsprechend der Verschluss 3 mit dem Gefäß 2 verschraubt wird.

Anschließend wird der Behälter 1 einer Druckbeaufschlagung unterzogen. Hierzu wird er bevorzugt in einer Druckkammer angeordnet, in welcher nachfolgend ein bestimmter Druck aufgebaut wird. Der Druck ist derart gewählt, dass ein sich in dem Innenraum 4 des Behälters 1 einstellender Innendruck zur biologischen Inaktivierung von eventuell in der Flüssigkeit 5 vorliegenden Mikroorganismen hinreichend ist. Um einen zuverlässigen Druckausgleich zwischen der Druckkammer beziehungsweise einer Außenumgebung 7 des Behälters 1 und dem Innenraum 4 zu ermöglichen, weist der Verschluss 3 zusätzlich zu einem starren Grundkörper 8 ein Druckübertragungselement 9 auf. Beide sind hier nicht dargestellt.

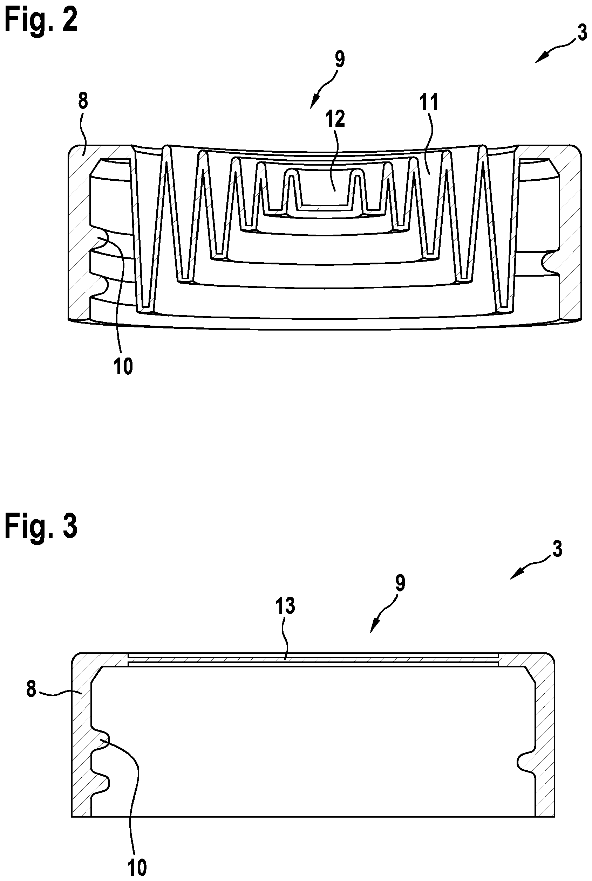

Die Figur 2 zeigt eine schematische Darstellung des Verschlusses 3, wobei der Grundkörper 8 sowie das Druckübertragungselement 9 erkennbar sind. Der Grundkörper 8 ist im Wesentlichen starr ausgebildet. In dem hier dargestellten Ausführungsbeispiel ist an ihm ein Schraubgewinde 10 ausgebildet, mittels welchem er mit dem Gefäß 2 verschraubbar ist. Das Druckübertragungselement 9 weist zur Realisierung des Druckausgleichs einen Faltenbalg 11 auf. Über diesen ist ein Mittelstück 12 verlagerbar an den Grundkörper 8 angebunden. Bei der vorstehend beschriebenen Druckbeaufschlagung des Behälters 1 wird das Druckübertragungselement 9 ausgelenkt, nämlich in Richtung des Gefäßes 2, insbesondere in den Innenraum 4 hinein. Dies wird durch die Ausgestaltung des Druckübertragungselements 9 als Faltenbalg 11 begünstigt.

Die Figur 3 zeigt eine schematische Darstellung eines anderen Verschlusses 3. Dieser ähnelt in Grundzügen dem Verschluss der Fig. 2, sodass auf die entsprechenden Ausführungen hingewiesen und nachfolgend lediglich auf die Unterschiede eingegangen wird. Diese liegen darin, dass das Druckübertragungselement 9 nicht den Faltenbalg 11 und das Mittelstück 12 aufweist, sondern vielmehr als Druckmembran 13 ausgestaltet ist. Die Druckmembran ist bevorzugt einstückig und materialeinheitlich mit dem Grundkörper 8 ausgebildet. Hierzu bestehen sie beispielsweise aus dem gleichen Material. In diesem Fall kann der Verschluss 3 durch Spritzgießen oder dergleichen hergestellt sein. Es kann jedoch auch vorgesehen sein, dass die Druckmembran 13 aus einem Material besteht, welches von dem Material des Grundkörpers 8 verschieden ist. Auch in diesem Fall ist ein Herstellen durch Spritzdüsen möglich, beispielsweise durch Verwendung eines Zweikomponenten-Spritzgießverfahrens.

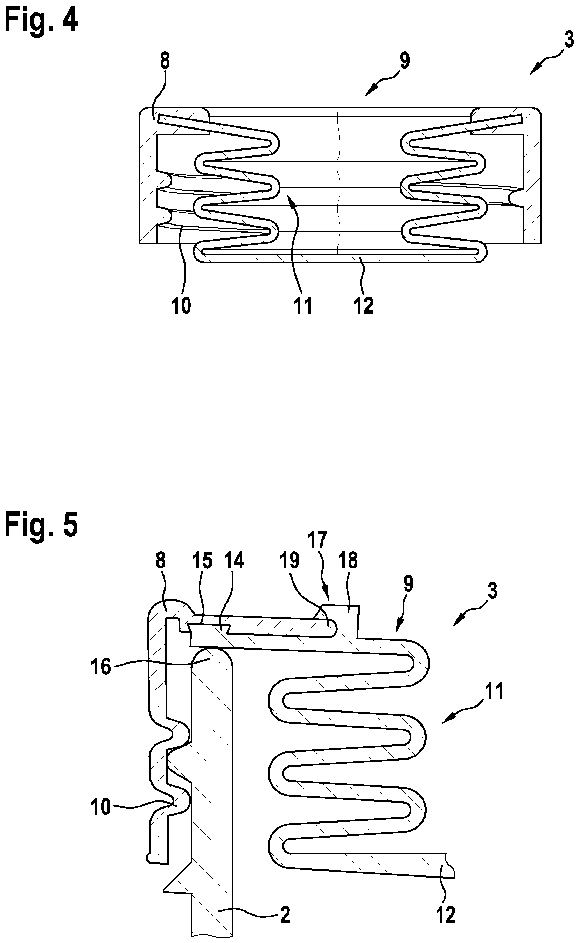

Die Figur 4 zeigt einen dritten Verschluss 3. Dieser ähnelt grundsätzlich dem Verschluss der Fig. 2, sodass auf die entsprechenden Ausführungen verwiesen und nachfolgend lediglich auf die Unterschiede eingegangen wird. Diese liegen darin, dass der Faltenbalg 11 des Druckübertragungselements 9 unterschiedlich orientiert ist. Während gerade Bereiche des Faltenbalgs 11 für das erste Ausführungsbeispiel nahezu parallel zu einer Längsmittelachse des Verschlusses 3 ausgerichtet sind, verlaufen sie für den dritten Verschluss nahezu senkrecht zu der Längsmittelachse. Beträgt beispielweise ein Winkel zwischen Längsmittelachsen der geraden Bereiche und der Längsmittelachse des Verschlusses 3 für die erste Ausführungsform mindestens 0°, insbesondere mehr als 0°, und höchstens 30°, höchstens 15°, höchstens 10° oder höchstens 5°, so beträgt er für den dritten Verschluss bevorzugt mindestens 60°, mindestens 75°, mindestens 80° oder mindestens 85° und höchstens 90°, insbesondere weniger als 90°.

Die Figur 5 zeigt eine schematische Darstellung eines Behälters 1, wobei das Gefäß 2 lediglich angedeutet ist. Der Verschluss 3 ähnelt grundsätzlich dem dritten Verschluss, sodass auf die entsprechenden Ausführungen verwiesen wird. Während bei dem dritten Verschluss jedoch eine einstückige Ausgestaltung des Druckübertragungselements 9 mit dem Grundkörper 8 vorgesehen sein kann, liegt das Druckübertragungselement 9 in dem Verschluss der Fig. 5 als separates Element vor, welches an dem Grundkörper 8 befestigt ist. Beispielsweise besteht das Druckübertragungselement 9 aus einem anderen Material als der Grundkörper 8.

Bevorzugt ist das Druckübertragungselement 9 formschlüssig an dem Grundkörper 8 befestigt. Hierzu greift ein Haltevorsprung 14 des Druckübertragungselements 9 in eine Ausnehmung 15 des Grundkörpers 8 ein. Der Haltevorsprung 14 ist beispielsweise schwalbenschwanzartig ausgestaltet, weitet sich also in dem Grundkörper 8 auf, sodass eine formschlüssige Verbindung zwischen dem Druckübertragungselement 9 und dem Grundkörper 8 hergestellt ist.

Weiter ist bevorzugt das Druckübertragungselement 9 derart angeordnet, dass es in einem verschlossenen Zustand des Behälters 1, also bei Anordnung des Verschlusses 3 an dem Gefäß 2 zum Verschließen der Befüllöffnung zwischen dem Grundkörper 8 und dem Gefäß 2 klemmend gehalten ist. Besonders bevorzugt ist der Behälter 1 derart ausgestaltet, dass der Haltevorsprung 14 in Überdeckung mit einem die Befüllöffnung begrenzenden Rand 16 angeordnet ist, sodass das Gefäß 2, insbesondere der Rand 16, den Haltevorsprung 14 in die Ausnehmung 15 drängt beziehungsweise in der Ausnehmung 15 hält. Hierdurch ist zum einen eine zuverlässige und dauerhafte Befestigung des Druckübertragungselements 9 an dem Grundkörper 8 bei verschlossenem Behälter 1 sichergestellt. Zum anderen erzielt das Druckübertragungselement 9 eine Dichtwirkung zwischen dem Grundkörper 8 und dem Gefäß 2, sodass der Behälter 1 besonders fluiddicht ist.

In der hier dargestellten Ausführungsform verfügt der Verschluss 3 über ein Signalelement 17. Dieses ist dazu vorgesehen und ausgebildet, sich bei einem Überschreiten eines Solldrucks durch einen während der Druckbeaufschlagung vorliegenden Druck irreversibel zu verändern. Entsprechend soll das Signalelement vor der Drucküberschreitung einen ersten Signalzustand und nach der Drucküberschreitung einen zweiten Signalzustand aufweisen. Das gezeigte Signalelement 17 weist ein Rastelement 18 auf, das vor der Druckbeaufschlagung mit einem Rastgegenelement 19 in Eingriff steht.

Das Rastgegenelement 19 ist hier ein Rand des Grundkörpers 8. Das Rastelement 18 umgreift das Rastgegenelement 19 hakenförmig. Bei einer Auslenkung des Druckübertragungselements 9 gerät das Rastelement 18 mit dem Rastgegenelement 19 bei dem Überschreiten des Solldrucks außer Eingriff. Dies erfolgt irreversibel, sodass auch bei einem nachfolgenden Unterschreiten des Solldrucks das Rastelement 18 und das Rastgegenelement 19 außer Eingriff verbleiben. Hierdurch ist auf einfache Art und Weise erkennbar, ob der Behälter 1 in ausreichendem Maße der Druckbehandlung unterzogen wurde. Die vorstehend beschrieben Ausgestaltung des Behälters 1 hat den Vorteil, dass unabhängig von der Ausgestaltung des Gefäßes 2 eine zuverlässige Druckbeaufschlagung des Innenraums 4 erfolgen kann, nämlich durch die Auslenkung des Druckübertragungselements 9. Der Verschluss 3 ist hierbei derart ausgestaltet, dass die Verlagerung des Druckübertragungselements 9 beschädigungsfrei und/oder elastisch erfolgt. Die beschrieben Ausgestaltung des Behälters 1 macht eine Herstellung des Gefäßes 2 aus Glas möglich, sodass das Gefäß 2 schlussendlich als Glasgefäß vorliegt.

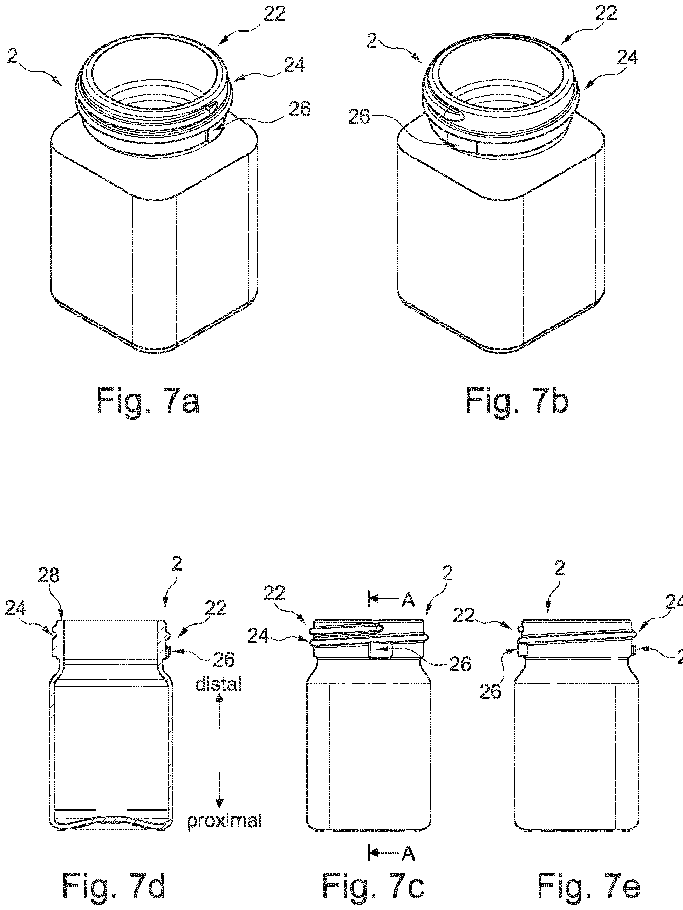

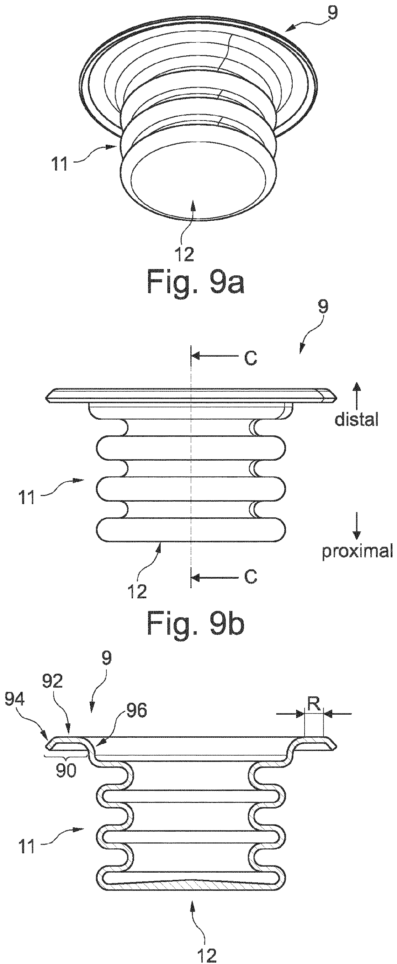

Die Figuren 6a bis 9c zeigen eine Ausführungsform des erfindungsgemäßen Behälters 1. Der Behälter 1 (siehe Figur 6b) weist ein Gefäß 2 und einen Verschluss 3 auf, wobei der Verschluss 3 einen Grundkörper 8 und ein Druckübertragungselement 9 aufweist. Die Figuren 6a bis 6d zeigen Ansichten des kompletten Behälters 1 mit Gefäß 2 und Verschluss 3. Die Figuren 7a bis 7e zeigen verschiedene Ansichten des Gefäßes 2, die Figuren 8a bis 8f zeigen verschiedene Ansichten des Grundkörpers 8 und die Figuren 9a bis 9c zeigen verschiedene Ansichten des Druckübertragungselements 9. Es sollte verstanden werden, dass sich die Erfindung sowohl auf den kompletten Behälter 1, als auch auf die einzelnen Bauteile dieses Behälters 1, also auch das Gefäß 2 sowie den Grundkörper 8 und das Druckübertragungselement 9, bezieht. Dieses Ausführungsbeispiel ist dem vorherstehenden Behälter ähnlich und insbesondere dem Behälter, der mit Bezug auf Figur 5 beschrieben wurde. Daher kann grundsätzlich auf die vorstehenden Ausführungen zu den anderen Behältern und insbesondere zu den Ausführungen bezüglich dem in Figur 5 gezeigten Behälter verwiesen werden.

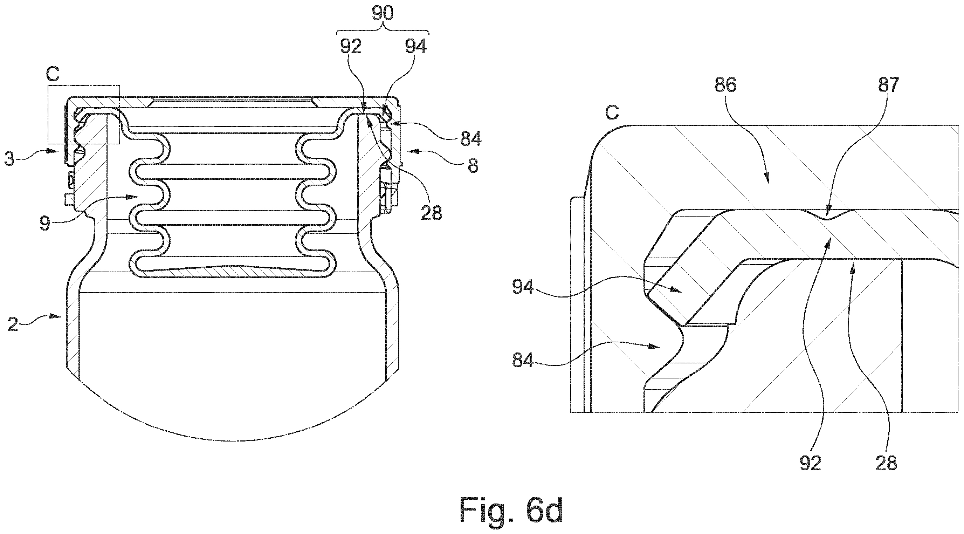

Wie in der Explosionsansicht der Figur 6b gezeigt umfasst der Behälter 1 das Gefäß 2, sowie den Verschluss 3, wobei der Verschluss 3 aus dem Grundkörper 8, der beispielsweise starr sein kann, und dem Druckübertragungselement 9 gebildet wird. Der Grundkörper 8 und das Druckübertragungselement 9 sind als separate Elemente ausgeführt. Wie insbesondere in den Figuren 9a bis 9c zu sehen ist weist das Druckübertragungselement 9 einen Faltenbalg 11 sowie ein Mittelstück 12 auf, deren Aufbau dem Aufbau entspricht, der mit Bezug auf die Figuren 4 und 5 bereits beschrieben wurde. Das Druckübertragungselement 9 ist rotationssymmetrisch um eine Drehachse, die auch als Längsachse bezeichnet wird. Das Druckübertragungselement 9 weist einen Verbindungsabschnitt 90 auf, der auch als Klemmabschnitt 90 bezeichnet werden kann. Mittels dieses Verbindungsabschnitts 90 kann eine Verbindung zwischen dem Druckübertragungselement 9, dem Grundkörper 8, sowie dem Gefäß 2 hergestellt werden. Insbesondere kann das Druckübertragungselement 9 mittels des Verbindungsabschnitts 90 verbunden werden. Insbesondere ist dieser Verbindungsabschnitt 90 zwischen dem Gefäß 2 und dem Grundkörper 8 eingeklemmt, wie dies beispielsweise im Figur 6d zu sehen ist. Daher kann der Verbindungsabschnitt 90 auch als Klemmabschnitt 90 bezeichnet werden. Der Verbindungsabschnitt 90 ist der Abschnitt des Druckübertragungselements 9, der radial am weitesten außen angeordnet ist. Der Verbindungsabschnitt 90 umfasst seinerseits einen im Wesentlichen planen Abschnitt 92 und einen gewinkelten Abschnitt 94. In der gezeigten Ausführungsform ist der (zumindest im Wesentlichen) plane Abschnitt 92 parallel zu einer Ebene, die orthogonal zur Längsachse ist, insbesondere in dem Zustand, in dem das Druckübertragungselement 9 zwischen Gefäß 2 und Grundkörper 8 eingeklemmt ist (siehe Figur 6d). Mittels der Längsachse des Druckübertragungselemente 9 lassen sich auch die Richtungen proximal und distal definieren. Proximal soll hierbei die Richtung sein, die zum Inneren des Gefäßes 2 hinweist und distal die entgegengesetzte Richtung. Es dürfte also verständlich sein, dass das Mittelstück 12 das proximalste Element des Druckübertragungselementes 9 ist. Der gewinkelte Abschnitt 94 weist einen Winkel zum planen Abschnitt 92 auf und verläuft vom planen Abschnitt 92 (unter diesem Winkel) in proximaler Richtung. Das bedeutet insbesondere, dass in einigen Ausführungsformen der plane Abschnitt 92 das distalste Element des Druckübertragungselementes 9 sein kann. Es wird an dieser Stelle aber auch darauf hingewiesen, dass das keine Notwendigkeit ist und es auch Ausführungsformen geben kann, in denen im Druckübertragungselement 9 weitere Elemente vorgesehen sind, die distaler angeordnet sind als der plane Abschnitt 92 - siehe beispielsweise die Figur 5, in der beispielsweise das Rastelement 18 weiter distal angeordnet ist.

Wie beispielsweise in Figur 6d zu sehen ist, ist das Druckübertragungselement 9 mittels des Verbindungsabschnittes 90 und insbesondere mittels des planen Abschnittes 92 des Verbindungsabschnittes 90 zwischen dem Gefäß 2 und dem Grundkörper 8 eingeklemmt.

Der gewinkelte Abschnitt 94 kann an ein Anschlagelement 84 des Grundkörpers 8 anschlagen. Hierdurch kann eine sichere und zuverlässige Abdichtung erzeugt werden. Insbesondere kann der gewinkelte Abschnitt 94 im mit dem Gefäß 2 verbundenen Zustand radial weiter außen angeordnet sein als ein distaler Endabschnitt 28.

Der gewinkelte Abschnitt 94 kann ferner auch dazu dienen, dass das Druckübertragungselement 9 auf dem Gefäß 2 zentriert wird. Das kann vorteilhaft sein, da ansonsten die Gefahr besteht, dass das Druckübertragungselement 9 beim Verschließen des Verschlusses abgleitet und anschließend keine dichtende Wirkung besitzt.

Wie insbesondere in Figur 9c zu sehen ist schließt sich radial einwärts des planen Abschnitts 92 ein Übergangsabschnitt 96 an, der zwischen dem planen Abschnitt 92 und dem Faltenbalg 11 angeordnet ist. In der gezeigten Ausführungsform ist dieser Übergangsabschnitt 96 radial weiter außen angeordnet, als die radial äußersten Abschnitte des Faltenbalgs 11. Das Vorsehen eines derartigen Übergangsabschnitt 96 stellt einen Unterschied zu dem in Figur 5 gezeigten Behälter da, bei dem sich ein planer Abschnitt quasi bis zur radial innersten Ausdehnung des Faltenbalges 11 erstreckt.

In der radialen Richtung kann der plane Abschnitt 92 beispielsweise eine Ausdehnung (siehe Figur 9 C, R) von 2 bis 8 mm, vorzugsweise 3 bis 5 mm, beispielsweise ca. 4 Millimeter haben. Eine derartige Ausgestaltung hat sich als besonders geeignet dafür erwiesen, eine sichere Abdichtung bereitzustellen und gleichzeitig dem Druckübertragungselement 9 genügend Flexibilität zu verleihen, um zuverlässig hohe Drücke in das Gefäß 2 einbringen zu können.

In den Figuren 8a bis 8g ist der Grundkörper 8 dargestellt. Der Grundkörper 8 kann auch als Verschlusskörper 8, Grundelement 8 oder allgemein einfach als Körper 8 bezeichnet werden. Abgesehen von einigen Elementen weist auch der Grundkörper 8 eine Dreh- bzw. Rotationssymmetrie auf. Daher kann der Grundkörper 8 als im Wesentlichen dreh- bzw. rotationssymmetrisch beschrieben werden. Daher kann auch für den Grundkörper 8 eine Symmetrieachse definiert werden, die auch als Längsachse bezeichnet werden kann. Im zusammengebauten Zustand (siehe z.B. Figuren 6a bis 6d) fällt diese Längsachse mit der Längsachse des Druckübertragungselementes 9 zusammen. Der Verschlussgrundkörper 8 (siehe beispielsweise Figuren 8b und 8g) weist ein Innengewinde 82 auf. Vorzugsweise umläuft dieses Innengewinde 82 die Längsachse in etwa einmal - siehe z.B. Figur 8b. Insbesondere kann das Innengewinde 82 die Längsachse um mehr als 250°, vorzugsweise um mehr als 300°, weiter vorzugsweise um mehr als 350° umlaufen, aber um nicht mehr als 450°, vorzugsweise nicht mehr 430°, weiter vorzugsweise nicht mehr als 400°. Auch für den Grundkörper 8 können die Richtungen proximal und distal definiert werden. Abermals sind diese Richtungen entlang der Längsachse definiert und abermals ist proximal die Richtung, die im bestimmungsgemäßen Gebrauch näher am Inneren des Gefäßes 2 angeordnet ist als die distale Richtung. Siehe in diesem Zusammenhang auch die Figur 8g, in der diese Richtungen definiert sind. Das Innengewinde 82 kann insbesondere die Dicke einer Wand des Grundkörpers 8 erhöhen, wie dies in Figur 8g abgebildet ist (so auch Figur 4, anders Figur 5).

Wie bereits beschrieben kann der Grundkörper 8 auch ein innenliegendes Anschlagelement 84 aufweisen. Insbesondere kann sich dieses Anschlagelement 84 komplett um die Längsachse des Grundkörpers 8 herum erstrecken. Damit kann dieses Anschlagelement 84 als ringförmiges Element ausgestaltet sein. Es dürfte verständlich sein, dass dieses Anschlagelement 84 drehsymmetrisch bezüglich der Längsachse ist. Wie bereits mit Blick auf Figur 6d beschrieben wurde kann der gewinkelte Abschnitt 94 des Verbindungsabschnitts 90 des Druckübertragungselementes 9 im bestimmungsgemäßen Gebrauch an dieses Anschlagelement 84 anschlagen. So kann im bestimmungsgemäßen Gebrauch eine definierte Position des Druckübertragungselementes 9 im Grundkörper 8 erzielt werden. Wie beispielsweise in Figur 8g zu sehen, ist das Anschlagelement 84 weiter distal angeordnet als das Innengewinde 82. Das Anschlagelement 84 kann eine geringere Ausdehnung in radialer Richtung aufweisen als das Innengewinde 82.

Weiter kann der Grundkörper 8 eine Deckelfläche 86 aufweisen - siehe z.B. Figuren 8a und 8b. In dieser Deckelfläche 86 kann eine Ausnehmung 88 angeordnet sein. Hiermit kann im zusammengebauten Zustand von Gefäß 2, Grundkörper 8 und Druckübertragungselement 9 - siehe z.B. Figuren 6a und 6d - ein Druck außerhalb des Behälters 1 auf die äußere Seite des Druckübertragungselementes 9 und mittels des Druckübertragungselementes 9 ins Innere des Gefäßes 2 übertragen werden. Die Deckelfläche 86 wird auch als Abdeckung bezeichnet.

Der Grundkörper 8, der auch als Verschlussring 8 bezeichnet werden kann, kann darüber hinaus auf einer Innenseite der Deckelfläche 86 eine Anpresskante 87 haben (siehe insbesondere Figuren 8g und 6d). Diese Anpresskante 87 kann wiederrum ringförmig ausgestaltet sein und über eine Grundfläche der Innenseite der Deckelfläche 86 hervorstehen.

Nach dem Verschließen (siehe Fig. 6d) kann diese Kante 87 das Druckübertragungselement 9 fixieren. Hierdurch kann das Druckübertragungselement 9 sicher fixiert werden, sodass das Druckübertragungselement 9 bei einer Druckbeaufschlagung ihren Sitz nicht verliert. Die Kante 87 kann das Druckübertragungselement 9 am Rand des Gefäßes 2 zusammendrücken, sodass die Dichtwirkung erhöht wird. Insbesondere kann die Anpresskante 87 so ausgestaltet sein, dass sie radial in dem Bereich angeordnet ist, der durch das distale Ende 28, das als Ringfläche ausgestaltet sein kann, definiert ist.

Wie beispielsweise in Figur 8g zu sehen ist kann das Anschlagelement 84 weiter distal angeordnet sein als das Innengewinde 82. Der Grundkörper 8 weist darüber hinaus ein radial äu-βeres Mantelelement 81 auf - siehe z.B. Figuren 8a, 8b und 8g. Auch die Figur 8c zeigt dieses Mantelelement, das auch als radiale äußere Fläche 81 bezeichnet werden kann. Das Mantelelement 81 kann auch als radialer Bereich 81 bezeichnet werden und stellt den Bereich des Körpers 8 dar, der sich entlang der Längsachse erstreckt. In einem distalen Bereich kann die radiale äußere Fläche 81 eine Strukturierung 810, beispielsweise in Form von stabförmigen Elementen, die parallel zur Längsachse verlaufen, aufweisen. Mittels dieser Strukturierung 810 kann für einen Nutzer insbesondere die Handhabung und ganz insbesondere das Öffnen und Schließen des Behälters 1 erleichtert werden. Der derart strukturierte distale Bereich 810 kann eine axiale Länge im Bereich von 4 mm bis 15 mm, vorzugsweise im Bereich von 6 mm bis 10 mm, weiter vorzugsweise im Bereich von 7 mm bis 9 mm, beispielsweise 8 mm aufweisen.

Darüber hinaus weist die radiale äußere Fläche 81, die auch als radial äußerer Bereich 81 beschrieben werden kann, einen proximalen Abschnitt 820 auf. Dieser proximale Abschnitt 820 kann in axialer Richtung eine Länge von 2 mm bis 10 mm, vorzugsweise 3 mm bis 7 mm, weiter vorzugsweise 4 mm bis 6 mm, beispielsweise 5 mm aufweisen. Der proximale Abschnitt 820 kann insbesondere mindestens ein Originalitätselement 822 aufweisen - siehe diesbezüglich beispielsweise die Figuren 8a, 8b, 8c, 8d, 8e und 8 g. In der hier besprochenen Ausführungsform weist der proximale Abschnitt 820 zwei Originalitätselemente 822 auf, die gegenüber voneinander, das heißt um 180° verschoben am proximalen Abschnitt 820 der radialen äußeren Fläche 81, die auch als radial äußerer Bereich 81 bezeichnet werden kann, angeordnet sind. In einer Ansicht entlang der Längsachse (siehe Figur 8e) sind die Originalitätselemente 822 jeweils keilförmig ausgebildet. Bevorzugt haben die Originalitätselemente 822 in dieser Ansicht einen Hinterschnitt 823. Direkt axial und direkt distal von den Originalitätselementen 822 ist kein Material vorgesehen. In der Figur 8d und ebenso in der Figur 8g links ist zu sehen, dass direkt distal und direkt proximal vom Originalitätselement 822 Freiräume 824 vorgesehen sind. Es ist aber auch möglich - siehe Figuren 8a und 8b, jeweils das vordere Originalitätselement 822 -, dass sich das Originalitätselement 822 am proximalen Ende der radialen äußeren Fläche 81 befindet, so dass lediglich nur ein Freiraum vorgesehen ist, da sich proximal vom Originalitätselement 822 ohnehin kein Material befindet. Das Originalitätselement 822 kann auch einen Sollbruchbereich 826 aufweisen, siehe beispielsweise Figur 8d. In der hier gezeigten Ausführungsform ist der Sollbruchbereich 826 in der Form von zwei (in axialer Richtung) dünnen Schenkeln vorgesehen, die über einen Freiraum getrennt sind.

Wie bereits beschrieben sind eine Mehrzahl (beispielsweise zwei) von Originaltätselementen 822 vorgesehen, die beispielsweise gegenüberliegend angeordnet sind - siehe hier z.B. Figur 8b. In solchen Ausführungsformen (siehe ebenfalls Figur 8b), kann es bevorzugt sein, dass die Originalitätselemente 822 in Bezug auf die Richtung, die durch die Längsachse definiert ist, an unterschiedlichen Positionen angeordnet sind. In Figur 8b ist beispielsweise zu sehen, dass das in dieser Figur vordere Originalitätselement 822 am proximalen Ende des proximalen Abschnitt 820 angeordnet ist, während das gegenüberliegende Originalitätselement 822 nicht am proximalen Ende des proximalen Abschnitt 820 angeordnet ist. Stattdessen ist bei diesem, in der Figur 8b hinten liegenden Originalitätselement 822 ein Materialabschnitt proximal von diesem Originalitätselement 822 angeordnet. In einfachen Worten sind die Originalitätselemente 822, also in unterschiedlichen Höhen angeordnet. Allgemein ist es möglich, dass die Originalitätselemente 822 weiter proximal vorgesehen sind, als das Innengewinde 82.

Auch für das Gefäß 2 (siehe die Figuren 7a bis 7c) lässt sich eine axiale Längsachse definieren, die im verbundenen Zustand mit der Längsachse des Druckübertragungselementes 9 zusammenfällt. In gleicher Weise wie vorhergehend beschrieben können die Richtungen distal und proximal entlang dieser Längsachse definiert werden - siehe hierzu Figur 7d. Hierbei ist die distale Richtung die Richtung, die im verbundenen Zustand zum Druckübertragungselement 9 bzw. zum Grundkörper 8 hinweist und die proximale Richtung die entgegengesetzte Richtung - siehe Figur 7d. Bereich 22 des Gefäßes 2 ist als Verbindungsabschnitt 22 ausgestaltet und ist insbesondere zur Verbindung mit dem Grundkörper 8 (und optional mit dem Druckübertragungselement 9) ausgestaltet. Der Verbindungsabschnitt 22 weist insbesondere ein Gewinde 24 auf. Dieses Außengewinde 24 kann mit dem Innengewinde 82 des Grundkörpers 8 verbunden werden. Darüber hinaus weist der Verbindungsabschnitt 22 mindestens ein Gegenelement 26 auf. Das mindestens eine Gegenelement 26 ist proximal von dem Außengewinde 24 angeordnet. Das Gegenelement 26 kann insbesondere mit dem Originalitätselement 822 so zusammenwirken, dass der Grundkörper 8 auf den Verbindungsabschnitt 22 des Gefäßes 2 aufgeschraubt werden kann, ohne die Sollbruchstelle 826 des Originalitätselements 822 zu beschädigen, diese Sollbruchstelle 826 aber beim Auseinanderschrauben von Grundkörper 8 und Verbindungsabschnitt 22 beschädigt wird. Insbesondere kann das Gegenelement 26 als Rampenelement ausgestaltet sein, dessen Höhe in radialer Richtung, also Abstand von der Längsachse, in einer Richtung stetig ansteigt und dann plötzlich absinkt. Hierüber ist es möglich, dass der Grundkörper 8 auf das Gefäß 2 aufgeschraubt wird, ohne das Originalitätselement 822 zu beschädigen, dass diese Elemente aber nur unter Beschädigung des Originalitätselementes 822 voneinander getrennt werden können.

In der in Figuren 7a bis 7e gezeigten Ausführungsform sind zwei Gegenelemente 26 vorgesehen, die gegenüberliegend, das heißt um 180° voneinander getrennt angeordnet sind. Ein solches Vorsehen von einer Mehrzahl von Originalitätselementen 822 am Grundkörper 8, beispielsweise von zwei Originalitätselementen 822, und von einer Mehrzahl von Gegenelementen 26, beispielsweise vorne zwei Gegenelementen 26, ist vorteilhaft, um die Originalität des Verschlusses sicher gewährleisten zu können. Das kann insbesondere dann relevant sein, wenn das Gefäß 2 aus Glas gefertigt ist, da die Fertigungstoleranzen bei Glas derart sind, dass das Vorsehen von nur einem Originalitätselement 822 und nur einem Gegenelement 26 in manchen Fällen nicht ausreichend sein kann.

Wie insbesondere in den Figuren 7d und 6d zu sehen ist, kann ein distales Ende 28 des Verbindungsabschnitt 22 insbesondere als planare Fläche ausgestaltet sein, deren Ebene senkrecht zur Längsachse des Gefäßes 2 ist. So kann beispielsweise eine geeignete Abdichtung des Druckübertragungselementes 9 erreicht werden.

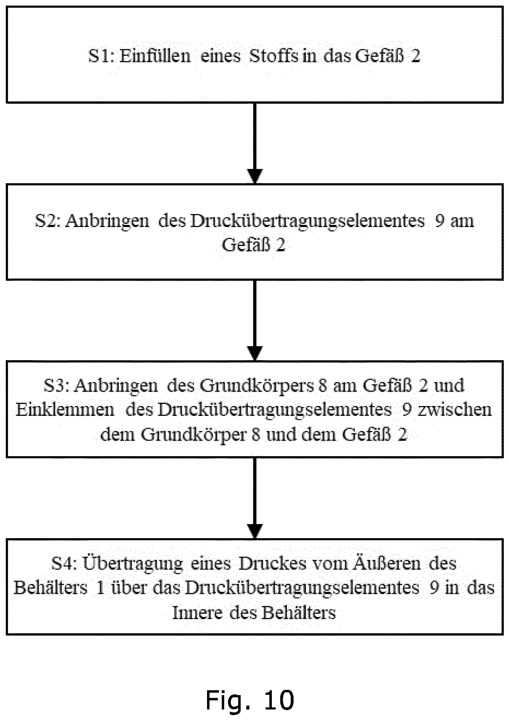

Die Ausführungsform, die mit Bezug zu Figuren 6a bis 9c beschrieben wurde, kann insbesondere auch in einem Verfahren verwendet werden, das mit Bezug auf Figur 10 beschrieben wird. In einem ersten Schritt S1 wird zunächst ein Stoff, beispielsweise eine Flüssigkeit, wie ein Saft, in das Gefäß eingefüllt.

Dann kann in einem zweiten Schritt S2 das Druckübertragungselement 9 am Gefäß 2 angebracht werden. Insbesondere kann (siehe Figur 6d) der plane Abschnitt 92 auf das distale Ende 28 des Gefäßes 2 gelegt werden. So dann kann in einem weiteren Schritt S3 der Grundkörper 8 am Gefäß angebracht werden und gleichzeitig das Druckübertragungselement 9 zwischen dem Grundkörper 8 und dem Gefäß 2 eingeklemmt werden. Dies kann insbesondere dadurch geschehen, dass der Grundkörper 8 auf das Gefäß 2 aufgeschraubt wird. Hierdurch kommt es zu einer Verbindung zwischen dem Innengewinde 82 des Grundkörpers 8 und dem Außengewinde 24 des Verbindungsabschnittes 22 des Gefäßes 2. Der gewinkelte Abschnitt 94 des Verbindungsabschnittes 90 des Druckübertragungselementes 9 schlägt hierbei an das Anschlagelement 84 an. Darüber hinaus werden die Originalitätselemente 822 über die Gegenelemente 26 des Verbindungsabschnittes 22 des Gefäßes 2 geführt, ohne dass die Originalitätselemente 822 beschädigt werden. Am Ende dieses Schrittes S3 liegt der Behälter 1 in der geschlossenen Konfiguration vor, die in Figuren 6a, 6b und 6d dargestellt ist. Anschließend wird in einem Schritt S4 ein Druck vom Äußeren des Behälters 1 über das Druckübertragungselement 9 in das Innere des Behälters 1 übertragen.

Beispielsweise kann der Behälter 1 in einer Druckkammer eingebracht werden, die sich auf einem Druck befindet, der deutlich über dem Atmosphärendruck liegt. Über das Druckübertragungselement 9 wird dieser Druck in das Innere des Behälters 1 übertragen, wodurch insbesondere auch bei starren Glasgefäßen eine solche Druckübertragung in das Innere des Behälters 1 stattfinden kann, sodass auch ein solcher Glasbehälter mittels Hochdruck sterilisiert werden kann.

## Patentansprüche

1. Verschluss (3) zum fluiddichten Verschließen eines mit einem Stoff (5) gefüllten Gefäßes (2), wobei der Verschluss (3) über ein fluiddichtes Druckübertragungselement (9) verfügt und wobei der Verschluss (3) über einen Grundkörper (8) verfügt, an dem das Druckübertragungselement (9) fluiddicht befestigbar ist, wobei das Druckübertragungselement (9) durch Druckbeaufschlagung beschädigungsfrei zur biologischen Inaktivierung von in dem Stoff (5) vorliegenden Mikroorganismen auslenkbar ist, wobei der Verschluss so ausgestaltet ist, dass das Druckübertragungselement (9), wenn das Gefäß (2) mit dem Verschluss (3) verschlossen ist, klemmend zwischen dem Gefäß (2) und dem Grundkörper gehalten ist (8),
**dadurch gekennzeichnet, dass**
der Grundkörper (8) mindestens ein Originalitätselement (822) aufweist, wobei der Grundkörper (8) ausgelegt ist, ohne Beschädigung des mindestens einen Originalitätselementes (822) an dem Gefäß (2) angebracht zu werden und mit einer Beschädigung mindestens eines des mindestens einen Originalitätselementes (822) von dem Gefäß (2) getrennt zu werden,
wobei der Grundkörper (8) eine Körper-Längsachse hat, entlang der die Richtungen proximal und distal definiert sind, wobei proximal im bestimmungsgemäßen Gebrauch zu einem Inneren des Gefäßes (2) hinweist und distal entgegengesetzt ist, wobei das mindestens eine Originalitätselement (822) eine Mehrzahl von Originalitätselementen (822) ist, und wobei mindestens zwei der Originalitätselemente (822) an unterschiedlichen Positionen entlang der Körper-Längsachse angeordnet sind.

2. Verschluss nach Anspruch 1, wobei die Mehrzahl von Originalitätselementen (822) zwei Originalitätselemente (822) umfasst, die bezüglich der Körper-Längsachse um 180° zueinander verschoben angeordnet sind.

3. Verschluss (3) nach einem der Ansprüche 1 oder 2, wobei der Grundkörper (8) materialeinheitlich ausgestaltet ist, wobei jedes Originalitätselement (822) eine Keilstruktur aufweist, wobei jedes Originalitätselement (822) einen Sollbruchbereich (826) aufweist und wobei direkt proximal und direkt distal von jedem Originalitätselement kein Material des Grundkörpers (8) vorgesehen ist.

4. Verschluss (3) nach einem der Ansprüche 1 bis 3, wobei der Grundkörper (8) ein Mantelelement (81) und eine Deckelfläche (86) aufweist, wobei das Mantelelement (81) einen distalen Bereich (810) und einen sich daran anschließenden proximalen Abschnitt (820) aufweist, wobei der proximale Abschnitt (820) entlang der Körper-Längsachse eine Länge von 2 mm bis 10 mm hat, wobei das mindestens eine Originalitätselemente im proximalen Abschnitt (820) vorgesehen ist.

5. Verschluss (3) nach einem der vorhergehenden Ansprüche, wobei das Druckübertragungselement (9) einen Verbindungsabschnitt (90) aufweist, wobei der Verbindungsabschnitt (90) ausgelegt ist, zwischen dem Grundkörper (8) und dem Gefäß (2) eingeklemmt zu werden, wobei der Verbindungsabschnitt (90) einen planen Abschnitt (92) aufweist, der zumindest im Wesentlichen parallel ist zu einer Ebene, die senkrecht zu einer Längsachse ist.

6. Verschluss (3) nach Anspruch 5, wobei der plane Abschnitt (92) in radialer Richtung eine Ausdehnung von 2 mm bis 8 mm und wobei der Verbindungsabschnitt (90) einen gewinkelten Abschnitt (94) aufweist, der in einem Winkel zum planen Abschnitt (92) angeordnet ist, wobei der gewinkelte Abschnitt (94) radial weiter außen angeordnet ist als der plane Abschnitt (92), wobei der Grundkörper (8) ein Anschlagelement (84) umfasst, wobei der gewinkelte Abschnitt (94) an das Anschlagelement (84) anschlägt.

7. Verschluss (3) nach einem der Ansprüche 5 und 6, wobei das Druckübertragungselement (9) einen Faltenbalg (11) aufweist, wobei das Druckübertragungselement (9) einen Übergangsabschnitt (96) aufweist, der zwischen dem planen Abschnitt (92) und dem Faltenbalg (11) angeordnet ist und wobei der Übergangsabschnitt (96) radial weiter außen angeordnet ist als der radial äußerste Abschnitt des Faltenbalgs (11).

8. Verschluss (3) nach einem der Ansprüche 5 bis 7, wobei das Druckübertragungselement (9) eine Ausdehnung senkrecht zur Längsachse hat, die im Bereich von 20 mm bis 60 mm liegt.

9. Behälter (1) mit einem Gefäß (2) und mit einem das Gefäß (2) fluiddicht verschließenden Verschluss (3) nach einem der vorhergehenden Ansprüche, wobei das Druckübertragungselement (9) klemmend zwischen dem Gefäß (2) und dem Grundkörper (8) gehalten ist.

10. Behälter (1) nach Anspruch 9, wobei das Gefäß (2) einen Verbindungsabschnitt (22) aufweist, der zur Verbindung mit dem Verschluss (3) ausgelegt ist, wobei der Verbindungsabschnitt (22) mindestens ein Gegenelement (26) aufweist, das dazu ausgelegt ist, mit dem mindestens einen Originalitätselement (822) zusammenzuwirken.

11. Behälter (1) nach Anspruch 10, wobei das Gefäß (2) eine Gefäß-Längsachse hat, entlang der die Richtungen proximal und distal definiert sind, wobei distal im bestimmungsgemäßen Gebrauch in Richtung des Grundkörpers weist und proximal entgegengesetzt ist, wobei das mindestens eine Gegenelement (26) eine Mehrzahl von Gegenelemente (26) ist, wobei die Gegenelement (26) zwei Gegenelemente (26) umfassen, die bezüglich der Gefäß-Längsachse um 180° zueinander verschoben angeordnet sind und wobei jedes des mindestens einen Gegenelementes (26) als Rampenelement ausgestaltet ist und wobei jedes der Gegenelemente (26) an der gleichen Position entlang der Gefäß-Längsachse angeordnet ist.

12. Verfahren zum Befüllen eines Behälters (1) mit einem Stoff, wobei der Behälter (1) ein Behälter nach einem der Ansprüche 9 bis 11 ist, wobei nach einem Einbringen des Stoffs in das Gefäß (2) und nach einem Verschließen des Gefäßes (2) mittels des Verschlusses (3) das Druckübertragungselement (9) durch Druckbeaufschlagung beschädigungsfrei zur biologischen Inaktivierung von in dem Stoff vorliegenden Mikroorganismen ausgelenkt wird.

13. Verfahren nach Anspruch 12,
wobei das Verschließen des Gefäßes (2) mittels des Verschlusses (3) die folgenden Schritte umfasst:
Anbringen des Druckübertragungselementes (9) am Gefäß (2) und
Anbringen des Grundkörpers (8) am Gefäß (2),
wobei der Schritt Anbringen des Grundkörpers (8) am Gefäß (2) nach dem Schritt Anbringen des Druckübertragungselementes (9) am Gefäß (2) ausgeführt wird.

14. Verfahren nach einem der Ansprüche 12 und 13,
wobei das Verfahren ferner umfasst
Einklemmen des Druckübertragungselementes (9) zwischen dem Gefäß (2) und dem Grundkörper (8).

## Claims

1. Closure (3) for fluid-tight closing of a vessel (2) filled with a substance (5), wherein the closure (3) comprises a fluid-tight pressure-transmission element (9) and wherein the closure (3) comprises a base body (8) to which the pressure-transmission element (9) is attachable in a fluid-tight manner, wherein the pressure-transmission element (9) is deflectable by pressurisation without incurring damage, for biological inactivation of microorganisms present in the substance, wherein the closure is configured in such a way that the pressure-transmission element (9), when the vessel (2) is closed with the closure (3), is held clamped between the vessel (2) and the base body (8),
**characterized in that** the base body (8) comprises at least one tamper-evident element (822), wherein the base body (8) is configured to be attached to the vessel (2) without damage to the at least one tamper-evident element (822) and to be separated from the vessel (2) with a damage to at least one of the at least one tamper-evident element (822),
wherein the base body (8) has a longitudinal body axis along which the directions proximal and distal are defined, wherein proximal, in the intended use, points towards an interior of the vessel (2) and distal is opposite thereto, wherein the at least one tamper-evident element (822) is a plurality of tamper-evident elements (822), and wherein at least two of the tamper-evident elements (822) are arranged at different positions along the longitudinal body axis.

2. Closure according to claim 1, wherein the plurality of tamper-evident elements (822) comprises two tamper-evident elements (822) arranged 180° displaced from each other with respect to the longitudinal body axis.

3. Closure (3) according to one of the claims 1 or 2, wherein the base body (8) is formed in a materially uniform manner, wherein each tamper-evident-element (822) comprises a wedge structure, wherein each tamper-evident-element (822) comprises a predetermined breaking area (826), and wherein no material of the base body (8) is provided directly proximal and directly distal to each tamper-evident element.

4. Closure (3) according to one of the claims 1 to 3, wherein the base body (8) comprises a sheath element (81) and a lid surface (86), wherein the sheath element (81) comprises a distal area (810) and an adjoining proximal portion (820), wherein the proximal portion (820) is having a length along the longitudinal body axis of from 2 mm to 10 mm, wherein the at least one tamper-evident-elements is provided in the proximal portion (820).

5. Closure (3) according to one of the preceding claims, wherein the pressure-transmission element (9) comprises a connecting portion (90), wherein the connecting portion (90) is configured to be clamped between the base body (8) and the vessel (2), wherein the connecting portion (90) comprises a planar portion (92) that is at least essentially parallel to a plane perpendicular to a longitudinal axis.

6. Closure (3) according to claim 5, wherein the planar portion (92) has an extension in the radial direction of from 2 mm to 8 mm and wherein the connecting portion (90) comprises an angled portion (94) arranged at an angle to the planar portion (92), wherein the angled portion (94) is arranged radially further outward than the planar portion (92), wherein the base body (8) comprises a stop element (84), wherein the angled portion (94) abuts the stop member (84).

7. Closure (3) according to one of the claims 5 and 6, wherein the pressure-transmission element (9) comprises a folding bellows (11), wherein the pressure-transmission element (9) comprises a transition portion (96) arranged between the planar portion (92) and the folding bellows (11), and wherein the transition portion (96) is arranged radially further outward than the radially outermost portion of the folding bellows (11).

8. Closure (3) according to one of the claims 5 to 7, wherein the pressure-transmission element (9) has an extension perpendicular to the longitudinal axis which is in the range of 20 mm to 60 mm.

9. Container (1) with a vessel (2) and with a closure (3) closing the vessel (2) in a fluid-tight manner according to one of the preceding claims, wherein the pressure-transmission element (9) is held clamped between the vessel (2) and the base body (8).

10. Container (1) according to claim 9, wherein the vessel (2) comprises a connecting portion (22) configured for connection to the closure (3), wherein the connecting portion (22) comprises at least one counter-element (26) configured to interact with the at least one tamper-evident element (822).

11. Container (1) according to claim 10, wherein the vessel (2) has a longitudinal vessel axis along which the directions proximal and distal are defined, wherein distal, in the intended use, points in the direction of the base body and proximal is opposite thereto, wherein the at least one counter element (26) is a plurality of counter elements (26), wherein the counter elements (26) comprise two counter elements (26) which are arranged 180° displaced from each other with respect to the longitudinal vessel axis, and wherein each of the at least one counter element (26) is configured as a ramp element, and wherein each of the counter elements (26) is arranged at the same position along the longitudinal vessel axis.

12. Method for filling a container (1) with a substance, wherein the container (1) is a container according to one of the claims 9 to 11, wherein after introduction of the substance into the vessel (2) and after closure of the vessel (2) by means of the closure (3), the pressure-transmission element (9) is deflected by pressurisation without incurring damage, for biological inactivation of microorganisms present in the substance.

13. Method according to claim 12,
wherein closing the vessel (2) by means of the closure (3) comprises the following steps:
mounting the pressure-transmission element (9) to the vessel (2), and
mounting the base body (8) to the vessel (2),
wherein the step of mounting the base body (8) to the vessel (2) is performed after the step of mounting the pressure-transmission element (9) to the vessel (2).

14. Method according to one of claims 12 and 13,
wherein the method further comprises
clamping the pressure-transmission element (9) between the vessel (2) and the base body (8).

## Revendications

1. - Fermeture (3) pour la fermeture étanche aux fluides d'un récipient (2) rempli d'une substance (5), la fermeture (3) disposant d'un élément de transfert de pression (9) étanche aux fluides et la fermeture (3) disposant d'un corps de base (8) sur lequel l'élément de transfert de pression (9) est apte à être fixé de manière étanche aux fluides, l'élément de transfert de pression (9) étant apte à être dévié par application de pression sans détérioration pour l'inactivation biologique de micro-organismes présents dans la substance (5), la fermeture étant conçue de telle sorte que l'élément de transfert de pression (9) est maintenu par serrage entre le récipient (2) et le corps de base (8) lorsque le récipient (2) est fermé par la fermeture (3),
**caractérisée par le fait que**
le corps de base (8) présente au moins un élément d'inviolabilité (822), le corps de base (8) étant adapté pour être fixé au récipient (2) sans détériorer ledit au moins un élément d'inviolabilité (822) et pour être séparé du récipient (2) si au moins l'un dudit au moins un élément d'inviolabilité (822) est détériorié,
fermeture dans laquelle le corps de base (8) a un axe longitudinal de corps le long duquel les directions proximale et distale sont définies, proximale, dans l'utilisation prévue, pointant vers un intérieur du récipient (2) et distale étant la direction opposée, dans laquelle ledit au moins un élément d'inviolabilité (822) consiste en une pluralité d'éléments d'inviolabilité (822), et dans laquelle au moins deux des éléments d'inviolabilité (822) sont disposés à différentes positions le long de l'axe longitudinal de corps.

2. - Fermeture selon la revendication 1, dans laquelle la pluralité d'éléments d'inviolabilité (822) comporte deux éléments d'inviolabilité (822) qui sont disposés décalés l'un de l'autre de 180° par rapport à l'axe longitudinal de corps.

3. - Fermeture (3) selon l'une des revendications 1 ou 2, dans laquelle le corps de base (8) est conçu dans un même matériau, chaque élément d'inviolabilité (822) présentant une structure en coin, chaque élément d'inviolabilité (822) présentant une zone de rupture (826) et aucun matériau du corps de base (8) n'étant prévu de manière directement proximale et directement distale par rapport à chaque élément d'inviolabilité.

4. - Fermeture (3) selon l'une des revendications 1 à 3, dans laquelle le corps de base (8) présente un élément d'enveloppe (81) et une surface de couvercle (86), l'élément d'enveloppe (81) présentant une zone distale (810) et une section proximale (820) qui lui est adjacente, la section proximale (820) ayant une longueur de 2 mm à 10 mm le long de l'axe longitudinal de corps, ledit au moins un élément d'inviolabilité étant prévu dans la section proximale (820).

5. - Fermeture (3) selon l'une des revendications précédentes, dans laquelle l'élément de transfert de pression (9) présente une section de liaison (90), la section de liaison (90) étant adaptée pour être serrée entre le corps de base (8) et le récipient (2), la section de liaison (90) présentant une section plane (92) qui est au moins sensiblement parallèle à un plan qui est perpendiculaire à un axe longitudinal.

6. - Fermeture (3) selon la revendication 5, dans laquelle la section plane (92) présente une étendue de 2 mm à 8 mm dans la direction radiale et dans laquelle la section de liaison (90) présente une section inclinée (94) qui est disposée selon un angle par rapport à la section plane (92), la section inclinée (94) étant disposée radialement plus à l'extérieur que la section plane (92), le corps de base (8) comportant un élément de butée (84), la section inclinée (94) venant en butée contre l'élément de butée (84).

7. - Fermeture (3) selon l'une des revendications 5 et 6, dans laquelle l'élément de transfert de pression (9) présente un soufflet pliant (11), dans laquelle l'élément de transfert de pression (9) présente une section de transition (96) qui est disposée entre la section plane (92) et le soufflet pliant (11), et dans laquelle la section de transition (96) est disposée radialement plus à l'extérieur que la section radialement la plus extérieure du soufflet pliant (11).

8. - Fermeture (3) selon l'une des revendications 5 à 7, dans laquelle l'élément de transfert de pression (9) présente une étendue perpendiculaire à l'axe longitudinal qui se situe dans la plage de 20 mm à 60 mm.

9. - Contenant (1) avec un récipient (2) et avec une fermeture (3) qui ferme le récipient (2) de manière étanche aux fluides selon l'une des revendications précédentes, l'élément de transfert de pression (9) étant maintenu par serrage entre le récipient (2) et le corps de base (8).

10. - Contenant (1) selon la revendication 9, dans lequel le récipient (2) présente une section de liaison (22) qui est adaptée pour la liaison avec la fermeture (3), la section de liaison (22) présentant au moins un contre-élément (26) qui est adapté pour coopérer avec ledit au moins un élément d'inviolabilité (822).

11. - Contenant (1) selon la revendication 10, dans lequel le récipient (2) a un axe longitudinal de récipient le long duquel les directions proximale et distale sont définies, distale, dans l'utilisation prévue, pointant vers le corps de base et la direction proximale étant opposée, ledit au moins un contre-élément (26) consistant en une pluralité de contre-éléments (26), les contre-éléments (26) comportant deux contre-éléments (26) qui sont disposés décalés l'un de l'autre de 180° par rapport à l'axe longitudinal de récipient, et chacun dudit au moins un contre-élément (26) étant conçu comme un élément de rampe, et chacun des contre-éléments (26) étant disposé à la même position le long de l'axe longitudinal de récipient.

12. - Procédé de remplissage d'un contenant (1) avec une substance, le contenant (1) étant un contenant selon l'une des revendications 9 à 11, dans lequel, après une introduction de la substance dans le récipient (2) et après une fermeture du récipient (2) au moyen de la fermeture (3), l'élément de transfert de pression (9) est dévié sans détérioration par application de pression pour l'inactivation biologique de micro-organismes présents dans la substance.

13. - Procédé selon la revendication 12, dans lequel la fermeture du récipient (2) au moyen de la fermeture (3) comprend les étapes suivantes :
- fixation de l'élément de transfert de pression (9) sur le récipient (2) ; et
- fixation du corps de base (8) sur le récipient (2),
dans lequel l'étape de fixation du corps de base (8) sur le récipient (2) est réalisée après l'étape de fixation de l'élément de transfert de pression (9) sur le récipient (2) .

14. - Procédé selon l'une des revendications 12 et 13, dans lequel le procédé comprend en outre le serrage de l'élément de transfert de pression (9) entre le récipient (2) et le corps de base (8).
